# EUROPEAN PATENT SPECIFICATION

(11) **EP 4 253 787 B1**
(45) Date of publication and mention of the grant of the patent: **09.09.2026**
(21) Application number: 20966471.3
(22) Date of filing: 24.12.2020
(51) Int. Cl.: F16D 65/18, F16D 65/095, F16H 63/34

(54) **HYDRAULIC DEVICE, BRAKE DEVICE, BRAKE SYSTEM AND BRAKE CONTROL METHOD**
HYDRAULISCHE VORRICHTUNG, BREMSVORRICHTUNG, BREMSSYSTEM UND BREMSSTEUERUNGSVERFAHREN
DISPOSITIF HYDRAULIQUE, DISPOSITIF DE FREIN, SYSTÈME DE FREIN ET PROCÉDÉ DE COMMANDE DE FREIN

(43) Date of publication of application: 04.10.2023
(73) Proprietor: Yinwang Intelligent Technologies Co., Ltd., Shenzhen, Guangdong 518129 (CN)
(72) Inventor: CHAI, Benben, Shenzhen, Guangdong 518129 (CN); LIU, Fengyu, Shenzhen, Guangdong 518129 (CN); ZHANG, Yongsheng, Shenzhen, Guangdong 518129 (CN)
(74) Representative: Pfenning, Meinig & Partner mbB
(86) International application number: PCT/CN2020/139000
(87) International publication number: WO 2022/133899

(56) References cited:
- CN-A- 101 655 158
- CN-A- 103 963 334
- CN-A- 109 219 544
- CN-A- 110 094 444
- CN-A- 110 541 898
- CN-A- 110 578 760
- CN-A- 110 594 319
- CN-U- 203 946 072
- CN-U- 207 145 487
- DE-A1- 102019 203 100
- US-A1- 2007 062 769
- US-A1- 2018 148 030

## Description

### TECHNICAL FIELD

This application relates to the field of vehicle braking technologies, and in particular, to a hydraulic apparatus, a braking system, a braking control method, and a computer readable medium.

### BACKGROUND

A braking system is an important part of a vehicle control system, which belongs to longitudinal control. Development of braking systems has gone through the following stages: conventional mechanical braking, hydraulic braking, electro-hydraulic brake (Electro-hydraulic Brake, EHB) and the like. At first, braking systems only had simple functions such as service braking and parking braking. Nowadays multi-function integration of braking systems, such as an anti-lock braking system (ABS) and automatic emergency braking (AEB) have been developed. In order to match implementation of higher-level self-driving technologies in the future, brake-by-wire (Brake-by-wire) has gradually become a research hotspot in the braking field. On one hand, an existing electro-hydraulic braking system is mature, but EHB cannot meet higher requirements (for example, requirements for linearity and quick response) of automatic driving on braking control. On the other hand, electro-mechanical brake (Electro-Mechanical Brake, EMB) cannot completely replace the electro-hydraulic braking due to some technical difficulties, such as motor output torque limitation and redundancy requirements. In the conventional technology, a solution of simply combining two sets of systems EMB and EHB is available, and redundancy backup of the braking system is implemented by using the two sets of systems EHB and EMB. The braking system of an existing solution may provide three working modes: First, the EMB provides braking force separately; second, the EHB provides braking force separately; and third, the EHB and the EMB jointly provide braking force. In the existing solution, an advantage of the EHB or the EMB can be used in simple combination, and the three working modes can be switched based on a braking requirement. However, such simple combination solution of structural decoupling makes a service braking system more complex, increases manufacturing costs of the system, and increases a size of the braking system, which is not conducive to being disposed in narrow space of wheels.
DE 10 2019 203100 A1 discloses a friction brake for a vehicle, comprising a pressure element for pressing a brake pad against a friction surface, a transmission unit which includes an input shaft and is arranged to convert a rotational movement of the input shaft into a translational movement of the pressure element, and an electric motor which is arranged to actuate the friction brake by driving the input shaft of the transmission unit in a first direction of rotation and to release the friction brake by driving the input shaft of the transmission unit in a second direction of rotation opposite to the first direction of rotation.
US 2018/148030 A1 discloses an electric caliper brake including a carrier at which a pair of pad plates are installed to be movable forward and backward, and a caliper housing slidably installed at the carrier and provided with a cylinder in which a piston having a concave cup-shaped interior is installed to be movable forward and backward by a braking hydraulic pressure.
US 2007/062769 A1 discloses a disc brake which enables a parking apparatus to be operated via actuation of an electric motor, thereby permitting easy operation of the parking apparatus.
CN 110 094 444 A discloses an electric cylinder device with autonomous braking and parking braking functions. CN110578760A relates to an electromechanical hydraulic line control brake, which includes a motor, a transmission mechanism, a rotating rod, a connecting rod, a large piston, a small piston, a hydraulic system and the like. The motor drives the movement of the rotating rod through the transmission mechanism, the movement of the connecting rod is driven by the movement of the rotating rod, and the large piston and the brake caliper body are driven to move in opposite directions through the hydraulic system, and the friction plates are pressed from both sides of the brake disc with the same force. CN110594319A relates to an electronic mechanical hydraulic wire control brake. CN110541898A relates to an electromechanical hydraulic line control actuator, which includes a motor, a transmission mechanism, a gear, a rack, a piston, a hydraulic system and the like.

### SUMMARY

This application provides a hydraulic apparatus, a braking system, a braking control method, and a computer readable medium, as defined in the appended set of claims. According to a first aspect as in claim 1, an embodiment of this application provides a hydraulic apparatus. The hydraulic apparatus includes a hydraulic cylinder body (17-1), a piston (17-2), a push assembly (17-3), and a first sealing component (17-4); the hydraulic cylinder body (17-1) is of a hollow cylinder shape, provided with a first opening and a second opening respectively at two ends; the piston (17-2) is disposed in the hydraulic cylinder body (17-1) and is located at the first opening; the first sealing component (17-4) covers the second opening; the hydraulic cylinder body (17-1), the piston (17-2), and the first sealing component (17-4) are configured to form a hydraulic chamber (17-5); the hydraulic cylinder body (17-1) is provided with a liquid flow opening (17-6), and the liquid flow opening (17-6) is located between the first sealing component (17-4) and the piston (17-2); the push assembly (17-3) is disposed in the hydraulic cylinder body (17-1); the liquid flow opening (17-6) and the push assembly (17-3) are located on a same side of the piston (17-2); and the piston (17-2) is configured to be enabled to move in the hydraulic cylinder body (17-1), driven by the push assembly (17-3).

The hydraulic apparatus may be disposed on a wheel based on a requirement, and is used with a braking actuator (for example, may be a disc brake) installed on the wheel together. A part of the piston (17-2) may be moved out of the hydraulic cylinder body (17-1) under push of the push assembly (17-3) or hydraulic oil, and acts on a braking lining block (17-14b) of the braking actuator. The braking lining block (17-14b) is squeezed by the piston (17-2) to rub against a braking disc (17-16) to implement braking. The braking actuator is provided with a reset mechanism. When force exerted by the push assembly (17-3) on the piston (17-2) is withdrawn, or when force exerted by the hydraulic oil on the piston (17-2) is reduced to a value less than a specific threshold, the piston (17-2) may be completely accommodated in the hydraulic cylinder body (17-1) under action of the reset mechanism of the braking actuator, that is, the piston (17-2) may be restored to an initial position.

The hydraulic chamber (17-5) of the hydraulic apparatus may be closed if the liquid flow opening (17-6) structure is not considered. The liquid flow opening (17-6) is configured to connect to an oil line, to provide a channel for braking fluid inflow and outflow the hydraulic chamber (17-5). Optionally, the liquid flow opening (17-6) may include a liquid inlet and a liquid outlet.

In a possible implementation, the second opening may be a circle. Optionally, a radius of the second opening may be less than a radius of the hydraulic cylinder body (17-1). Optionally, a radius of the second opening may be equal to a radius of the hydraulic cylinder body (17-1). When the radius of the second opening is equal to the radius of the hydraulic cylinder body (17-1), machining and assembly can be simplified. When the radius of the second opening is less than the radius of the hydraulic cylinder body (17-1), structural strength of the hydraulic cylinder body (17-1) can be improved, and a sealing effect can also be improved, so that the hydraulic cylinder can bear larger oil pressure in the cylinder.

Optionally, the first sealing component (17-4) may include a plurality of sealing rings, and the plurality of sealing rings are disposed in parallel in an axial direction, to achieve better sealing performance.

In a possible implementation, the piston (17-2) is configured to be enabled to move in a direction away from the liquid flow opening (17-6), driven by the push assembly (17-3).

In a possible implementation, the hydraulic apparatus further includes a second sealing component (17-7), and the second sealing component (17-7) is disposed between the hydraulic cylinder body (17-1) and the piston (17-2). Further, the second sealing component (17-7) is disposed between an inner circumferential surface of the hydraulic cylinder body (17-1) and an outer circumferential surface of the piston (17-2). A function of the second sealing component (17-7) is to ensure that the piston (17-2) and the second sealing component (17-7) are sealed, and that the second sealing component (17-7) and the inner wall of the hydraulic cylinder body (17-1) are sealed. Optionally, the second sealing component (17-7) may include a plurality of sealing rings, and the plurality of sealing rings are disposed in parallel on the circumferential surface of the piston, to achieve a better sealing effect.

According to the invention, the push assembly (17-3) includes a push block (17-9) and a transmission component (17-8). The transmission component (17-8) passes through the first sealing component (17-4). A function of the first sealing component (17-4) is to ensure that the transmission component (17-8) and the first sealing component (17-4) are sealed, and that the first sealing component (17-4) and the inner wall of the hydraulic cylinder body (17-1) are also sealed.

In a possible implementation, the push assembly (17-3) is configured to convert a rotary motion of the transmission component (17-8) into a linear motion of the push block (17-9).

In a possible implementation, the push assembly (17-3) may be driven by a linear motor to push the piston (17-2) to move.

According to the invention, the hydraulic apparatus further includes: a locking component (17-10). The locking component (17-10) is located outside the hydraulic cylinder body (17-1); and the locking component (17-10) includes a first working state and a second working state; when the locking component (17-10) is in the first working state, the locking component (17-10) and the transmission component (17-8) are coupled to lock the transmission component (17-8); and when the locking component (17-10) is in the second working state, the locking component (17-10) and the transmission component (17-8) are decoupled. Being coupled may be understood as that the locking component (17-10) and the transmission component (17-8) keep relatively static through rigid connection, friction contact, or the like, and the locking component prevents the transmission component (17-8) from changing a movement state. Being decoupled may be understood as that the locking component (17-10) and the transmission component (17-8) are not connected, and the locking component (17-10) does not affect a movement state of the transmission component (17-8).

According to the invention, the transmission component (17-8) includes a ball screw (17-11) and a screw nut (17-12). The ball screw (17-11) passes through the first sealing component (17-4); the screw nut (17-12) and the ball screw (17-11) are matched in the hydraulic cylinder body (17-1); and the screw nut (17-12) is fastened to the push block (17-9). The ball screw (17-11) and the screw nut (17-12) are assembled, and a rotary motion acting on the ball screw (17-11) can be converted into a linear motion of the screw nut (17-12). Beneficial effects of the ball screw (17-11) are the following: The rotary motion acting on the ball screw (17-11) can be converted into the linear motion of the screw nut (17-12) to drive the piston to move in the axial direction of the hydraulic cylinder body; and when the ball screw (17-11) and the screw nut (17-12) are used as transmission components, high reliability and high transmission efficiency can be ensured.

According to the invention, the transmission component (17-8) is a ball screw, and the push block (17-9) is a screw nut (17-12); the ball screw (17-11) passes through the first sealing component (17-4); and the screw nut (17-12) and the ball screw (17-11) are matched in the hydraulic cylinder body (17-1).

According to the invention, the hydraulic apparatus further includes a planetary reducer (17-13). The planetary reducer (17-13) is located outside the hydraulic cylinder body (17-1) and is connected to the ball screw (17-11).

According to the invention, the planetary reducer (17-13) includes a sun gear (17-13a), a planet gear (17-13b), a ring gear (17-13c), and a planet carrier (17-13d). The planet carrier (17-13d) is fastened to the ball screw. The planetary reducer (17-13) can reduce a rotation speed output by a drive mechanism (17-15) and amplify a torque that is output.

According to the invention, when the locking component (17-10) is in the first working state, the locking component (17-10) and the planet carrier (17-13d) are coupled, and the locking component (17-10) is configured to lock the ball screw (17-11) by locking the planet carrier (17-13d); and when the locking component (17-10) is in the second working state, the locking component (17-10) and the planet carrier (17-13d) are decoupled.

In a possible implementation, the locking component (17-10) is secured on an outer wall of the hydraulic cylinder body (17-1).

In a possible implementation, the hydraulic apparatus further includes a support arm (17-14a), and the support arm (17-14a) and the hydraulic cylinder body (17-1) are integrated. Optionally, the support arm (17-14a) and the hydraulic cylinder body may be machined together in a casting manner, or the support arm (17-14a) and the hydraulic cylinder body may be welded together in a welding manner, or the support arm (17-14a) may be fastened to the hydraulic cylinder body by using another connecting piece. A specific integration manner is not limited. In specific implementation, the support arm (17-14a) is one of components of a caliper (17-14) of the braking actuator. Overall occupied space can be further reduced by integrating the support arm (17-14a) with the cylinder body in a structure.

An example not part of the present invention provides another hydraulic apparatus. The hydraulic apparatus includes: a hydraulic cylinder body (17-1), a piston (17-2), and a push block (17-9); the hydraulic cylinder body (17-1) is of a hollow cylinder shape, provided with a first opening and a second opening respectively at two ends; the piston (17-2) is disposed in the hydraulic cylinder body (17-1) and is located at the first opening; and the push block (17-9) is disposed in the hydraulic cylinder body (17-1) and is located at the second opening, the push block (17-9) is provided with a liquid flow opening (17-6); the hydraulic cylinder body (17-1), the piston (17-2), and the push block (17-9) are configured to form a hydraulic chamber (17-5); and the piston (17-2) is configured to be enabled to move in the hydraulic cylinder body (17-1), driven by the push block (17-9).

In a possible implementation, a groove is provided on an end face that is of the push block (17-9) and that faces the piston (17-2). The groove communicates with the hydraulic chamber, and when a gap between the piston (17-2) and the push block (17-9) is small, if the piston (17-2) is pushed through hydraulic pressure to provide braking force, the groove that is provided facilitates oil to quickly enter the hydraulic chamber.

In a possible implementation, the piston (17-2) is configured to be enabled to move in a direction away from the liquid flow opening (17-6), driven by the push assembly (17-3).

In a possible implementation, the hydraulic apparatus further includes a first sealing component (17-4), and the first sealing component (17-4) is disposed between the hydraulic cylinder body (17-1) and the push block (17-9).

In a possible implementation, the hydraulic apparatus further includes a second sealing component (17-7), and the second sealing component (17-7) is disposed between the hydraulic cylinder body (17-1) and the piston (17-2).

In a possible implementation, the hydraulic apparatus further includes a transmission component (17-8), and the transmission component (17-8) is located outside the hydraulic cylinder body (17-1) and is connected to the push block (17-9).

In a possible implementation, the hydraulic apparatus further includes: a locking component (17-10). The locking component (17-10) is located outside the hydraulic cylinder body (17-1); and the locking component (17-10) includes a first working state and a second working state; when the locking component (17-10) is in the first working state, the locking component (17-10) and the transmission component (17-8) are coupled to lock the transmission component (17-8); and when the locking component (17-10) is in the second working state, the locking component (17-10) and the transmission component (17-8) are decoupled.

In a possible implementation, the transmission component (17-8) includes a ball screw (17-11) and a screw nut (17-12), and the screw nut (17-12) is fastened to the push block (17-9).

In a possible implementation, the transmission component (17-8) is a ball screw, and the push block (17-9) is a screw nut (17-12); and the screw nut (17-12) and the ball screw (17-11) are matched.

In a possible implementation, the hydraulic apparatus further includes: a planetary reducer (17-13), and the planetary reducer (17-13) is connected to the ball screw (17-11).

In a possible implementation, the planetary reducer (17-13) includes a sun gear (17-13a), a planet gear (17-13b), a ring gear (17-13c), and a planet carrier (17-13d). The planet carrier (17-13d) is fastened to the ball screw (17-3). The planetary reducer (17-13) can reduce a rotation speed output by a drive mechanism (17-15) and amplify a torque that is output.

In a possible implementation, when the locking component (17-10) is in the first working state, the locking component (17-10) and the planet carrier (17-13d) are coupled, and the locking component (17-10) is configured to lock the ball screw (17-11) by locking the planet carrier (17-13d); and when the locking component (17-10) is in the second working state, the locking component (17-10) and the planet carrier (17-13d) are decoupled.

In a possible implementation, the locking component (17-10) is secured on an outer wall of the hydraulic cylinder body (17-1).

In a possible implementation, the hydraulic apparatus further includes a support arm (17-14a), and the support arm (17-14a) is integrated on the outer wall of the hydraulic cylinder body (17-1).

Another example not part of the present invention provides a braking apparatus. The braking apparatus includes a drive mechanism (17-15), a wheel cylinder, and a braking actuator mechanism. The wheel cylinder includes a hydraulic cylinder body (17-1), a piston (17-2), a push block (17-9), a transmission component (17-8), a first sealing component (17-4), and a second sealing component (17-7); the hydraulic cylinder body (17-1) is of a hollow cylinder shape, provided with a first opening and a second opening respectively at two ends; and the piston (17-2) is disposed in the hydraulic cylinder body (17-1) and is located at the first opening; the first sealing component (17-4) covers the second opening; the second sealing component (17-7) is disposed between the hydraulic cylinder body (17-1) and the piston (17-2); a liquid flow opening (17-6) is provided on the hydraulic cylinder body (17-1), the liquid flow opening (17-6) is located between the first sealing component (17-4) and the piston (17-2), and the push block (17-9) is disposed in the hydraulic cylinder body (17-1); the liquid flow opening (17-6) and the push block (17-9) are located on a same side of the piston (17-2); the transmission component (17-8) is connected to the push block (17-9) and passes through the first sealing component (17-4); the hydraulic cylinder body (17-1), the piston (17-2), and the transmission component (17-8), the first sealing component (17-4) and the second sealing component (17-7) are configured to form a hydraulic chamber (17-5); the drive mechanism (17-15) includes an output shaft (17-15a), and the output shaft (17-15a) of the drive mechanism (17-15) is connected to the transmission component (17-8); and the piston (17-2) is configured to be enabled to move in a direction away from the liquid flow opening (17-6), driven by the push block (17-9), and to act on the braking actuator mechanism to implement braking.

In a possible implementation, the transmission component (17-8) includes a ball screw (17-11) and a screw nut (17-12); the ball screw (17-11) passes through the first sealing component (17-4), the screw nut (17-12) and the ball screw (17-11) are matched in the hydraulic cylinder body (17-1); and the screw nut (17-12) is fastened to the push block (17-9).

In a possible implementation, the transmission component (17-8) is a ball screw, and the push block (17-9) is a screw nut (17-12); the ball screw (17-11) passes through the first sealing component (17-4); and the screw nut (17-12) and the ball screw (17-11) are matched in the hydraulic cylinder body (17-1).

In a possible implementation, the braking apparatus further includes a planetary reducer (17-13); and the output shaft (17-15a) of the drive mechanism (17-15) is connected to the ball screw (17-11) through the planetary reducer (17-13).

In a possible implementation, the planetary reducer (17-13) includes a sun gear (17-13a), a planet gear (17-13b), a ring gear (17-13c), and a planet carrier (17-13d). The output shaft (17-15a) is fastened to the sun gear (17-13a), and the planet carrier (17-13d) is fastened to the ball screw. The planetary reducer (17-13) can reduce a rotation speed output by the drive mechanism (17-15) and amplify a torque that is output.

In a possible implementation, the braking apparatus further includes: a locking component (17-10). The locking component (17-10) includes a first working state and a second working state; and when the locking component (17-10) is in the first working state, the locking component (17-10) and the planet carrier (17-13d) are coupled, and the locking component (17-10) is configured to lock the ball screw (17-11) by locking the planet carrier (17-13d); and when the locking component (17-10) is in the second working state, the locking component (17-10) and the planet carrier (17-13d) are decoupled.

In a possible implementation, the braking actuator is a disc brake, the disc brake includes a caliper (17-14), and the caliper (17-14) is integrated with the wheel cylinder.

A further example not part of the present invention provides another braking apparatus. The braking apparatus includes: a drive mechanism (17-15), a wheel cylinder, a braking actuator mechanism and a transmission component (17-8). The wheel cylinder includes a hydraulic cylinder body (17-1), a piston (17-2), a push block (17-9), a first sealing component (17-4), and a second sealing component (17-7); the hydraulic cylinder body (17-1) is of a hollow cylinder shape, provided with a first opening and a second opening respectively at two ends; the piston (17-2) is disposed in the hydraulic cylinder body (17-1) and is located at the first opening; the second sealing component (17-7) is disposed between the hydraulic cylinder body (17-1) and the piston (17-2); the push block (17-9) is disposed in the hydraulic cylinder body (17-1) and is located at the second opening, and the push block (17-9) is provided with a liquid flow opening (17-6); the first sealing component (17-4) is disposed between the hydraulic cylinder body (17-1) and the push block (17-9); the hydraulic cylinder body (17-1), the piston (17-2), the push block (17-9), the first sealing component (17-4), and the second sealing component (17-7) are configured to form a hydraulic chamber (17-5); the transmission component (17-8) is connected to the push block (17-9); the drive mechanism (17-15) includes an output shaft (17-15a), and the output shaft (17-15a) is connected to the transmission component (17-8); and the piston (17-2) is configured to be enabled to move in a direction away from the liquid flow opening (17-6), driven by the push block (17-9), and to act on the braking actuator mechanism to implement braking.

In a possible implementation, a groove is provided on an end face that is of the push block (17-9) and that faces the piston (17-2).

In a possible implementation, the transmission component (17-8) includes a ball screw (17-11) and a screw nut (17-12), and the screw nut (17-12) is fastened to the push block (17-9).

In a possible implementation, the transmission component (17-8) is a ball screw, and the push block (17-9) is a screw nut (17-12); and the screw nut (17-12) and the ball screw (17-11) are matched.

In a possible implementation, the braking apparatus further includes a planetary reducer (17-13); and the output shaft (17-15a) of the drive mechanism (17-15) is connected to the ball screw (17-11) through the planetary reducer (17-13). The planetary reducer (17-13) can reduce a rotation speed output by a drive mechanism (17-15) and amplify a torque that is output.

In a possible implementation, the planetary reducer (17-13) includes a sun gear (17-13a), a planet gear (17-13b), a ring gear (17-13c), and a planet carrier (17-13d); and the output shaft (17-15a) of the drive mechanism (17-15) is fastened to the sun gear (17-13a), and the planet carrier (17-13d) is fastened to the ball screw.

In a possible implementation, the braking apparatus further includes: a locking component (17-10). The locking component (17-10) includes a first working state and a second working state; and when the locking component (17-10) is in the first working state, the locking component (17-10) and the planet carrier (17-13d) are coupled, and the locking component (17-10) is configured to lock the ball screw (17-11) by locking the planet carrier (17-13d); and when the locking component (17-10) is in the second working state, the locking component (17-10) and the planet carrier (17-13d) are decoupled.

In a possible implementation, the braking actuator is a disc brake, the disc brake includes a caliper (17-14), and the caliper (17-14) is integrated with the wheel cylinder.

An embodiment of the present invention as in claim 4 provides a braking system. The braking boost assembly includes a main boost cylinder, the main boost cylinder includes a first cylinder body and a first piston, and the first piston is disposed in the first cylinder body; and the first piston and the first cylinder body form a first hydraulic chamber; a first liquid flow opening is provided on the main boost cylinder, and the first liquid flow opening communicates with the first hydraulic chamber; the first hydraulic chamber is connected to the hydraulic chamber (17-5) of the wheel cylinder through the first oil line; and one end of the first oil line is connected to the liquid flow opening (17-6) of the wheel cylinder, and the other end of the first oil line is connected to the first liquid flow opening.

According to a second aspect of the invention as in claim 5, an embodiment of this application provides a braking control method. Specifically, the braking system to which the braking control method is applied includes: a braking boost assembly, a first oil line, and the braking apparatus described in claim 4 of the present invention. The braking boost assembly includes a main boost cylinder, a boost motor, and a pressure control unit (6); the main boost cylinder includes a first cylinder body and a first piston, and the first piston is disposed in the first cylinder body; the first piston and the first cylinder body form a first hydraulic chamber; the first piston moves in the main boost cylinder, driven by the boost motor, to change a volume of the first hydraulic chamber; the main boost cylinder is provided with a first liquid flow opening, and the first liquid flow opening communicates with the first hydraulic chamber; the first hydraulic chamber is connected to the hydraulic chamber of the wheel cylinder through the first oil line; and one end of the first oil line is connected to the liquid flow opening of the wheel cylinder, and the other end of the first oil line is connected to the first liquid flow opening. The braking control method includes: calculating target braking force required for target braking; sending a first instruction to the boost control unit (6), where the first instruction instructs the boost control unit (6) to control the boost motor to drive the first piston to reduce the volume of the first hydraulic chamber, so that a braking fluid in the first hydraulic chamber flows into the hydraulic chamber (17-5) through the first oil line, after passing through the first liquid flow opening, to drive the piston (17-2) to move, so as to act on the braking actuator mechanism to provide first braking force; and sending a second instruction to the drive mechanism (17-15), where the second instruction instructs the drive mechanism (17-15) to drive the piston (17-2) to move, by using the output shaft (17-15a), the transmission component (17-8), and the push block (17-9), to provide second braking force on the braking actuator mechanism, where the first braking force and the second braking force are coupled to meet the target braking force.

In an example not part of the invention, after the target braking force required for the target braking is calculated, the braking control method further includes: determining, based on the target braking force, that hydraulic braking and mechanical braking need to be coupled to meet the target braking force, where the hydraulic braking is corresponding to the first braking force, and the mechanical braking is corresponding to the second braking force.

In an example not part of the invention, the braking apparatus further includes: a locking component (17-10). The locking component (17-10) is located outside the hydraulic cylinder body (17-1); and the locking component (17-10) includes a first working state and a second working state; when the locking component (17-10) is in the first working state, the locking component (17-10) and the transmission component (17-8) are coupled to lock the transmission component (17-8); and when the locking component (17-10) is in the second working state, the locking component (17-10) and the transmission component (17-8) are decoupled. The braking control method further includes: detecting a parking braking requirement; sending a third instruction to the drive mechanism (17-15), where the third instruction instructs the drive mechanism (17-15) to drive the piston (17-2) to move, by using the output shaft (17-15a), the transmission component (17-8) (if any), and the push block (17-9), to provide third braking force that meets the parking braking requirement by acting on the braking actuator mechanism; and sending a fourth instruction to the locking component (17-10), where the fourth instruction instructs the locking component (17-10) to switch from the second working state to the first working state.

### BRIEF DESCRIPTION OF DRAWINGS

FIG. 1 is a schematic diagram of a functional framework of a vehicle (100) according to an embodiment of this application;
FIG. 2 is a schematic diagram of an installation position of a braking apparatus according to an embodiment of this application;
FIG. 3 is a principle diagram of a braking system according to an embodiment of this application;
FIG. 4(a) is a principle diagram of a braking apparatus according to a non-claimedembodiment of this application;
FIG. 4(b) is a principle diagram of another braking apparatus according to a non-claimed embodiment of this application;
FIG. 4(c) is a principle diagram of still another braking apparatus according to an embodiment of this application;
FIG. 4(d) is a principle diagram of yet another braking apparatus according to an embodiment of this application;
FIG. 4(e) is a principle diagram of yet still another braking apparatus according to an embodiment of this application;
FIG. 5(a) is a principle diagram of a hydraulic apparatus according to an embodiment of this application;
FIG. 5(b) is a principle diagram of another hydraulic apparatus according to an embodiment of this application;
FIG. 5(c) is a principle diagram of still another hydraulic apparatus according to an embodiment of this application;
FIG. 5(d) is a principle diagram of yet another hydraulic apparatus according to an embodiment of this application;
FIG. 5(e) is a principle diagram of yet still another hydraulic apparatus according to an embodiment of this application;
FIG. 6(a) is a principle diagram of a hydraulic apparatus according to an embodiment of this application;
FIG. 6(b) is a principle diagram of another hydraulic apparatus according to an embodiment of this application;
FIG. 6(c) is a principle diagram of still another hydraulic apparatus according to an embodiment of this application;
FIG. 6(d) is a principle diagram of yet another hydraulic apparatus according to an embodiment of this application;
FIG. 7 is a principle diagram of an implementation of a locking component according to an embodiment of this application;
FIG. 8 is a schematic diagram of a common braking working state of a braking system according to an embodiment of this application;
FIG. 9 is a schematic diagram of an emergency braking working state of a braking system according to an embodiment of this application;
FIG. 10 is a schematic diagram of a redundant braking working state of a braking system according to an embodiment of this application;
FIG. 11 is a schematic diagram of a parking braking working state of a braking system according to an embodiment of this application;
FIG. 12 is a schematic flowchart of a service braking control method for a braking system according to an embodiment of this application; and
FIG. 13 is a schematic flowchart of a parking braking control method for a braking system according to an embodiment of this application.

### DESCRIPTION OF EMBODIMENTS

The following describes embodiments of this application with reference to accompanying drawings. It is clear that the described embodiments are merely some but not all of embodiments of this application. A person of ordinary skill in the art may learn that, with technology development and emergence of a new scenario, the technical solutions provided in embodiments of this application are also applicable to a similar technical problem.

In this specification, claims, and accompanying drawings of this application, the terms "first", "second", and so on are intended to distinguish between similar objects but do not necessarily indicate a specific order or sequence. It should be understood that, the data termed in such a way is interchangeable in proper circumstances, so that embodiments described herein can be implemented in a sequence other than the sequence illustrated or described herein. In addition, the terms "include", "contain" and any other variants mean to cover the non-exclusive inclusion. For example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effect can be achieved. Division into the modules in this application is logical division. In actual application, there may be another division manner. For example, a plurality of modules may be combined or integrated into another system, or some features may be ignored or not performed. In addition, the displayed or discussed mutual coupling or direct coupling or communication connection may be through some ports, and the indirect coupling or communication connection between modules may be in an electrical form or another similar form. This is not limited in this application. In addition, modules or sub-modules described as separate components may be or may not be physically separated, or may be or may not be physical modules, or may be distributed to a plurality of circuit modules. Some or all of the modules may be selected based on an actual requirement to implement the objectives of the solutions of this application.

In this application, unless otherwise specified and limited, the terms such as "mount", "link", "connect", "fasten", and "dispose" should be understood broadly. For example, the term "connect" may be a fixed connection, may be a detachable connection, or may be integration; may be a mechanical connection or may be an electrical connection; or may be a direct connection, may be an indirect connection implemented by using an intermediate medium, or may be communication inside two elements or an interaction relationship between two elements. A person of ordinary skill in the art may interpret specific meanings of the foregoing terms in this application based on specific cases.

Automobiles are experiencing the trend of electrification, network connection, intelligence, and sharing.

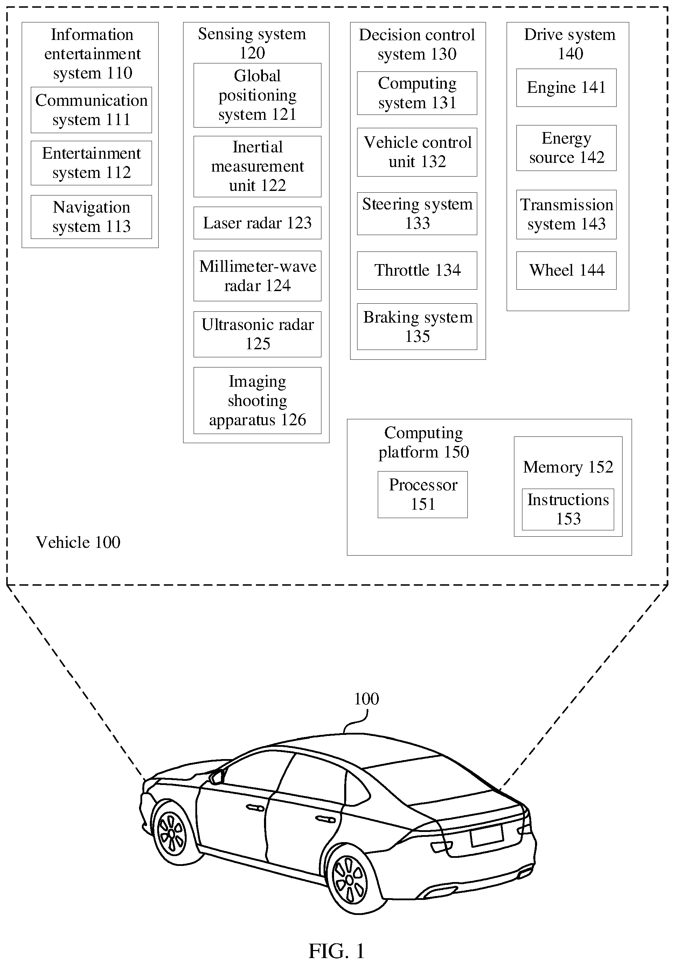

FIG. 1 is a schematic functional block diagram of a vehicle (100) according to an embodiment of this application. The vehicle (100) may be configured to be fully or partially autonomous. For example, the vehicle (100) may obtain ambient environment information of the vehicle (100) by using a sensing system (120), and obtain an automatic driving policy based on analysis of the ambient environment information, to implement fully automatic driving, or present an analysis result to a user, to implement partial automatic driving.

The vehicle (100) may include various subsystems, such as an information entertainment system (110), a sensing system (120), a decision control system (130), a drive system (140), and a computing platform (150). Optionally, the vehicle (100) may include more or fewer subsystems, and each subsystem may include a plurality of components. In addition, each subsystem and component of the vehicle (100) may be connected to each other in a wired or wireless manner.

A steering system 133 may operate to adjust a moving direction of the vehicle (100). For example, in an embodiment, the steering system 133 may be a steering wheel system.

A throttle (134) is used to control an engine (141) to go in parallel to control a speed of the vehicle (100).

A braking system (135) may be used to control the speed of the vehicle (100). The braking system (135) may use friction to slow down the wheel (144). In some embodiments, the braking system (135) may convert kinetic energy of the wheel (144) into a current. The braking system (135) may alternatively take other forms to slow down the wheel (144) to control the speed of the vehicle (100).

The drive system (140) may include components that feed power to the vehicle (100). In an embodiment, the drive system (140) may include an engine (141), an energy source (142), a transmission system (143), and a wheel (144). The engine (141) may be an internal combustion type engine, a motor, an air compression engine, or another type of engine combination, for example, a hybrid engine including a gasoline engine and a motor, or a hybrid engine including an internal combustion type engine and an air compression engine. The engine (141) converts the energy source (142) into mechanical energy.

Examples of the energy source (142) include gasoline, diesel, other oil-based fuels, propane, other compressed gas-based fuels, ethanol, solar panels, batteries, or other power sources. The energy source (142) may also provide energy to another system of the vehicle (100).

The transmission apparatus (143) may transmit mechanical power from the engine (141) to the wheel (144). The transmission apparatus (143) may include a gearbox, a differential, and a drive shaft. In an embodiment, the transmission apparatus (143) may further include another component, for example, a clutch. The drive shaft may include one or more shafts that may be coupled to one or more wheels (144).

Some or all of the functions of the vehicle (100) are controlled by the computing platform (150). The computing platform (150) may include at least one processor (151), and the at least one processor (151) may execute instructions (153) stored in a non-transitory computer readable medium, such as a memory (152). In some embodiments, the computing platform (150) may also be a plurality of computing devices that control individual components or subsystems of the vehicle (100) in a distributed manner.

The processor (151) may be any conventional processor, such as a central processing unit (central processing unit, CPU). Alternatively, the processor (151) may further include, for example, a graphic processing unit (graphic processing unit, GPU), a field-programmable gate array (field-programmable gate array, FPGA), a system on chip (system on chip, SOC), an application-specific integrated chip (application-specific integrated circuit, ASIC), or a combination thereof. Although FIG. 1 functionally illustrates the processor, the memory, and other elements of a computer 110 in a same block, a person of ordinary skill in the art should understand that the processor, the computer, or the memory may actually include a plurality of processors, computers, or memories that may or may not be stored in a same physical housing. For example, the memory may be a hard disk drive, or another storage medium located in a housing different from a housing of the computer 110. Therefore, it is understood that a reference to the processor or the computer includes a reference to a set of processors or computers or memories that may or may not operate in parallel. Different from using a single processor to perform the steps described herein, some components such as a steering assembly and a speed reduction assembly may include respective processors. The processor performs only computation related to a component-specific function.

In various aspects described herein, the processor may be located far away from the vehicle and communicate with the vehicle in a wireless manner. In another aspect, some processes described herein are performed on a processor disposed inside the vehicle, while others are performed by a remote processor, including performing steps necessary for single manipulation.

In some embodiments, the memory (152) may include instructions (153), for example, program logic. The instruction (153) may be executed by the processor (151) to perform various functions of the vehicle (100). The memory (152) may also include additional instructions, including instructions to send data to, receive data from, interact with, and/or control one or more of the information entertainment system (110), the sensing system (120), the decision control system (130), and the drive system (140).

In addition to the instructions (153), the memory (152) may further store data, such as a road map, route information, and a location, a direction, a speed, and other such vehicle data of the vehicle, and other information. Such information may be used by the vehicle (100) and the computer system 150 during operation of the vehicle (100) in autonomous, semi-autonomous, and/or manual modes.

The computing platform (150) may control the functions of the vehicle (100) based on inputs received from various subsystems (for example, the drive system (140), the sensing system (120), and the decision control system (130)). For example, the computing platform (150) may utilize input from the decision control system (130) to control the steering system (133) to avoid obstacles detected by the sensing system (120). In some embodiments, the computer system 150 is operated to provide control over many aspects of the vehicle (100) and the subsystems of vehicle.

A vehicle control unit (132) may be configured to coordinate and control the power battery and the engine (141) of the vehicle, to improve power performance of the vehicle (100).

Optionally, one or more of the foregoing components may be installed separately from or associated with the vehicle (100). For example, the memory 152 may exist partially or completely separate from the vehicle (100). The foregoing components may be communicatively coupled together in a wired and/or wireless manner.

Optionally, the foregoing components are merely examples. During actual application, components in the foregoing modules may be added or removed based on an actual requirement. FIG. 1 should not be construed as a limitation on embodiments of this application.

An autonomous vehicle traveling on a road, for example, the vehicle (100), may identify an object in an ambient environment of the autonomous vehicle, to determine to adjust a current speed. The object may be another vehicle, a traffic control device, or another type of object. In some examples, each identified object may be considered separately, and based on features of each object, such as a current speed of the object, acceleration of the object, and a spacing between the object and the vehicle, may be used to determine the speed to be adjusted by the autonomous vehicle.

Optionally, the vehicle (100) or a sensing and computing device (for example, the computing system (131), the computing platform (150)) associated with the vehicle (100) may predict a behavior of the recognized object based on a characteristic of the recognized object and a state of the ambient environment (for example, traffic, rain, ice on the road, etc.). Optionally, all identified objects depend on behavior of each other, and therefore all the identified objects may be considered together to predict behavior of a single identified object. The vehicle (100) can adjust the speed of the vehicle (100) based on the predicted behavior of the identified object. In other words, the autonomous vehicle can determine, based on the predicted behavior of the object, a state to which the vehicle needs to be adjusted (for example, acceleration, deceleration, or stop). In this process, another factor may also be considered to determine the speed of the vehicle (100), for example, a horizontal location of the vehicle (100) on a road on which the vehicle travels, curvature of the road, and proximity between a static object and a dynamic object.

In addition to providing an instruction for adjusting the speed of the autonomous vehicle, the computing device may provide an instruction for modifying a steering angle of the vehicle (100), so that the autonomous vehicle can follow a given track and/or maintain a safe horizontal distance and a safe vertical distance from an object (for example, a car on a neighboring lane of the road) near the autonomous vehicle.

In some embodiments, the vehicle may exchange data with a cloud to implement various functions or application services of the vehicle, or upgrade the vehicle. Data exchange may be implemented based on an existing communications standard, for example, C-V2X or LTE-V2X.

In some embodiments, the vehicle obtains a high-definition map service based on data provided by a cloud. For a large city or region, an entire set of high-definition maps has a large amount of data, and is not suitable or cannot be completely stored on a vehicle end. Therefore, during driving, the vehicle obtains a high-definition map of a small area at a current location in real time, and map data is loaded in real time as required. When a high-definition map of a specific area is not required, the high-definition map of the area is released from the vehicle.

In some embodiments, the vehicle can improve safety in a driving process using technologies such as interaction with a cloud and vehicle-to-vehicle V2V (vehicle-to-vehicle) communication. The vehicle may collect road surface information and ambient vehicle information by using an in-vehicle sensor, and share the information with ambient vehicles by using a cloud or V2V, so as to help an advanced driver assistance system (advanced driver assistance system, ADAS) of the vehicle obtain adequate information and avoid collision. In harsh weather conditions, vehicles can obtain weather information and road traffic accident information from the cloud to assist the ADAS system of the vehicle in planning and reduce accident risks. For example, in rainstorm weather, a vehicle may obtain a road section with severe water accumulation in real time through the cloud, so that the road section with severe water accumulation can be avoided in navigation planning.

In some embodiments, the vehicle may reduce energy consumption of the vehicle and reduce carbon emission by interacting with a cloud. For example, the cloud may send real-time traffic light information to the vehicle, and the ADAS system of the vehicle may receive a traffic light change interval at a front intersection in advance, and calculate a time used by the vehicle to pass based on a current vehicle speed, so as to determine a proper and safe passing time and plan a driving speed of the vehicle. In this way, not only energy consumption of the vehicle can be reduced, but also driving safety can be improved.

In some embodiments, the vehicle may obtain/update an algorithm of the ADAS system of the vehicle through the cloud, for example, a neural network-based image processing algorithm used by a perception module of the ADAS system, and for example, a convolutional neural network (convolutional neural network, CNN)-based image processing algorithm. Training of the image processing algorithm may be completed on the cloud, and is updated as training data is updated. Correspondingly, the vehicle may periodically obtain an updated image processing algorithm from the cloud, or in some embodiments, the vehicle periodically obtains a parameter of an updated image processing algorithm from the cloud. In this way, an image processing algorithm of a vehicle end can be periodically updated, so that a function of the vehicle can be periodically improved. The foregoing process may also be applicable to another algorithm (for example, a voice processing algorithm). In addition, the vehicle may also upload data obtained by the vehicle to the cloud, to provide training data for an algorithm and the like on the cloud.

The vehicle (100) may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

For automobiles, a braking system is one of the most important systems in automobile field, which is directly related to comprehensive performance of vehicles and safety of passengers' lives and property. The braking system of the vehicle has undergone several changes and improvements, from leather friction braking to drum brakes and disc brakes, then to a mechanical anti-lock braking system, and then to an analog electronic anti-lock braking system emerging with the development of electronics technologies. When a new energy vehicle decelerates or brakes, a part of mechanical energy of the vehicle may be converted into electric energy by using a motor and the electric energy is stored in a battery, and a part of braking force is generated to implement speed reduction or braking of the vehicle. When the vehicle accelerates again, the motor reconverts energy stored in the battery into kinetic energy for driving of the vehicle. Due to a series of limitations such as single shaft braking and low braking strength on regenerative braking of the motor, not requirements of all braking conditions can be met. Therefore, the new energy vehicle still requires a conventional hydraulic braking system.

In recent years, for the pursuit of integration, high efficiency and reliability, research on brake-by-wire (brake-by-wire, BBW) systems has gradually emerged. The brake-by-wire system includes an electro-hydraulic brake (electro-hydraulic brake, EHB) system and an electro-mechanical brake (electro-mechanical brake, EMB) system.

EHB, developed on the basis of a conventional hydraulic brake, performs braking through driving a hydraulic system by a motor. Compared with EMB, EHB retains a hydraulic mechanical braking system as a backup, which can ensure safety in braking of a vehicle when a fault occurs on an electronic control unit. Currently, EHB has become one of the research hotspots in the development of the braking systems of vehicles.

The electro-hydraulic braking system is developed on the basis of the conventional hydraulic brake. A control mechanism of the electro-hydraulic braking system uses an electronic braking pedal instead of a conventional hydraulic braking pedal, and hydraulic pressure for barking is established by a hydraulic pump driven by a direct-current motor, which can achieve a linear braking effect. However, feedback of an electro-hydraulic braking pedal in a braking energy recovery condition is significantly different from feedback of the electro-hydraulic braking pedal in a non-braking energy recovery condition, and the decoupled control is inconvenient. In addition, because electro-hydraulic braking is not suitable for parking braking, a vehicle equipped with the electro-hydraulic braking system usually needs to be additionally equipped with a parking braking apparatus, which increases complexity and costs of a vehicle system.

For the electro-mechanical braking system, a braking pedal and a braking system can be decoupled effectively, but the electro-mechanical braking system cannot continue to work when a power source of the braking system fails, which may cause a driving safety problem.

To resolve the foregoing problems, this application provides a hydraulic apparatus, a braking apparatus, a braking system, and a braking control method, which have good integration and miniaturization effects. According to the solutions provided in this application, integration of electro-mechanical braking and electro-hydraulic braking functions can be implemented. The following describes in detail embodiments provided in this application.

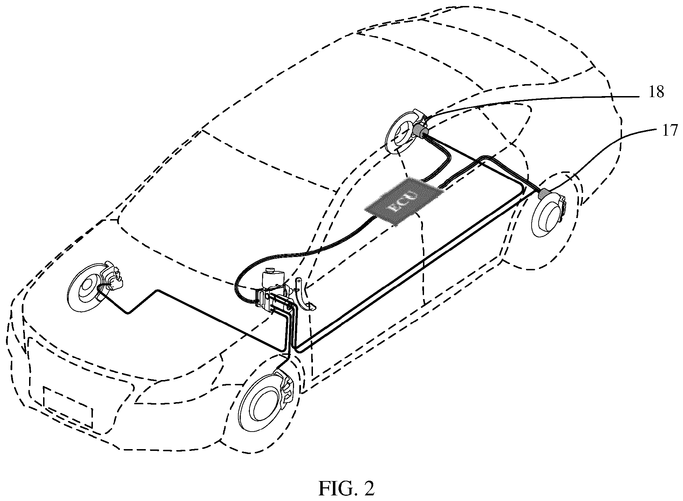

FIG. 2 is a schematic diagram of a position in a vehicle at which a braking system is installed according to some embodiments of this application. A rear shaft braking module (17/18) provided in some embodiments of this application is disposed on a rear wheel. The rear shaft braking module integrates mechanical braking and hydraulic braking functions, which can realize integration of brake functions and miniaturization of a braking apparatus.

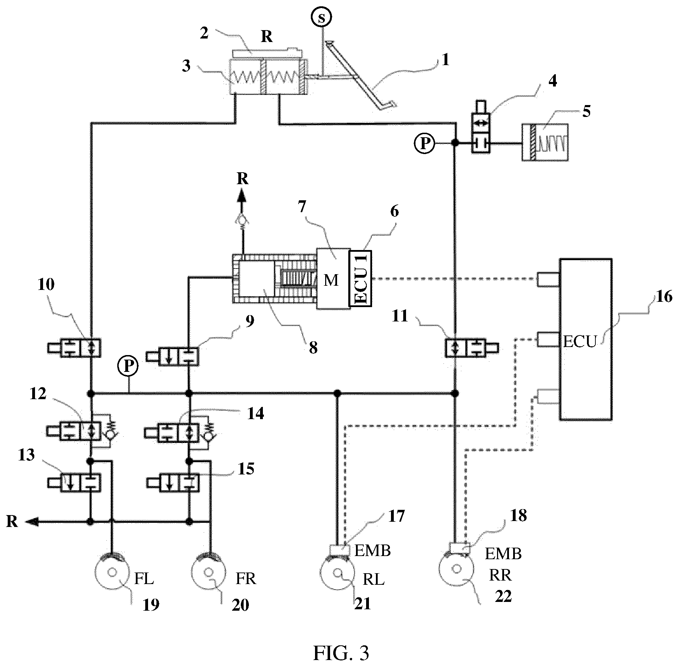

FIG. 3 is a schematic principle diagram of a braking system according to some embodiments of this application. As shown in FIG. 3, the braking system provided in some embodiments of this application may include a pedal module, a rear shaft braking module, a front shaft hydraulic braking module, a linear pump pressure module, and a main braking control module.

The rear shaft braking module includes a braking apparatus provided in some embodiments of this application. The following describes in detail the braking apparatus provided in embodiments of this application. Then, with reference to the braking system provided in embodiments of this application, this specification of this application describes the braking apparatus, the braking system, and the braking system control method provided in embodiments of this application.

Embodiment 1 to Embodiment 4 of this application provide four possible implementations of a braking apparatus. Embodiment 5 provides a possible implementation of a braking system. Embodiment 6 provides a braking system control method. Embodiment 7 provides a braking system control method.

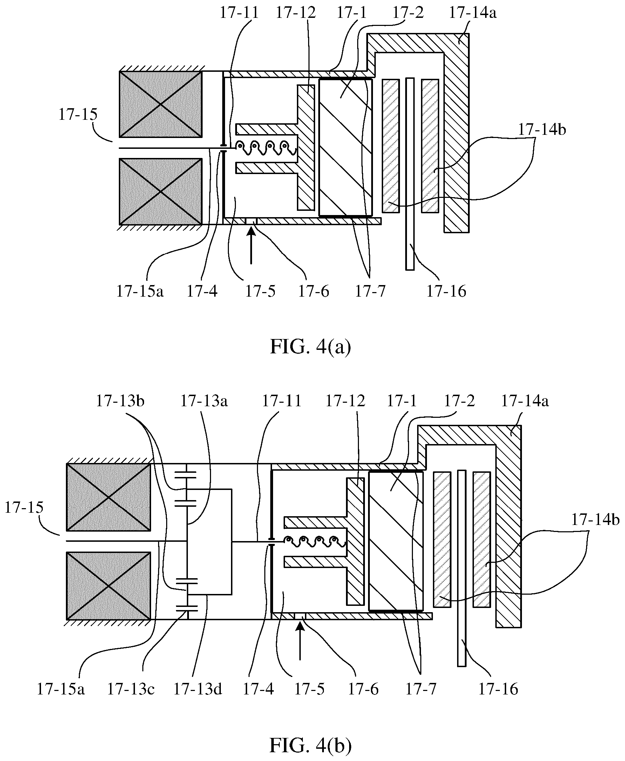

FIG. 4(a) is a schematic diagram of a possible implementation of a braking apparatus according to Embodiment 1 of this application. As shown in FIG. 4(a), the braking apparatus includes a drive mechanism, a wheel cylinder, and a braking actuator mechanism.

In Embodiment 1, the wheel cylinder includes a hydraulic cylinder body (17-1), a piston (17-2), a first sealing component (17-4) and a second sealing component (17-7), a ball screw (17-11), and a screw nut (17-12). The hydraulic cylinder body (17-1) is of a hollow cylinder shape, provided with a first opening and a second opening respectively at two ends. The piston (17-2) is disposed in the hydraulic cylinder body (17-1) and is located at the first opening. The first sealing component (17-4) covers the second opening. The second sealing component (17-7) is disposed between the hydraulic cylinder body (17-1) and the piston (17-2). The hydraulic cylinder body (17-1) is provided with a liquid flow opening (17-6), and the liquid flow opening (17-6) is located between the first sealing component (17-4) and the piston (17-2). The screw nut (17-12) is disposed in the hydraulic cylinder body (17-1). The ball screw (17-11) is connected to the screw nut (17-12) and passes through the first sealing component (17-4). The screw nut (17-12) and the ball screw (17-11) are matched in the hydraulic cylinder body (17-1). The liquid flow opening (17-6) and the screw nut (17-12) are on a same side of the piston (17-2). The hydraulic cylinder body (17-1), the piston (17-2), the ball screw (17-11), the first sealing component (17-4) and the second sealing component (17-7) are configured to form a hydraulic chamber (17-5)

In Embodiment 1, the drive mechanism (17-15) is a motor and includes a motor output shaft (17-15a).

In Embodiment 1, the braking actuator mechanism may be a disc brake, and the braking actuator mechanism includes a caliper (17-14) integrated with the wheel cylinder. The caliper (17-14) includes a support arm (17-14a) and a friction plate (17-14b), and other components are not shown.

It should be noted that in this specification, a braking lining block (17-14b) is also referred to as a friction plate.

In Embodiment 1, the output shaft (17-15a) of the drive mechanism (17-15) is connected to the ball screw (17-11) of the wheel cylinder. The piston (17-2) of the wheel cylinder is configured to be enabled to move in a direction away from the liquid flow opening (17-6), driven by the screw nut (17-12), and to act on the braking actuator mechanism to implement braking. In addition, the piston (17-2) of the wheel cylinder may also move in the direction away from the liquid flow opening (17-6) under push of hydraulic oil, and act on the braking actuator mechanism to implement braking.

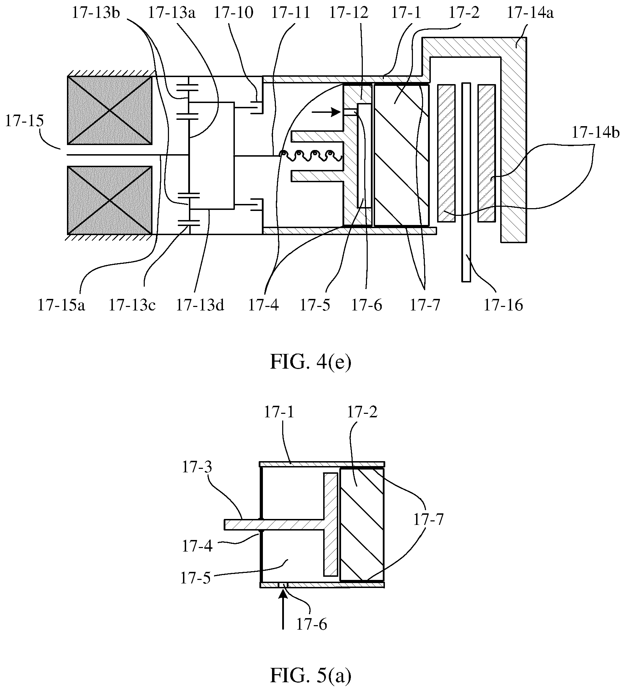

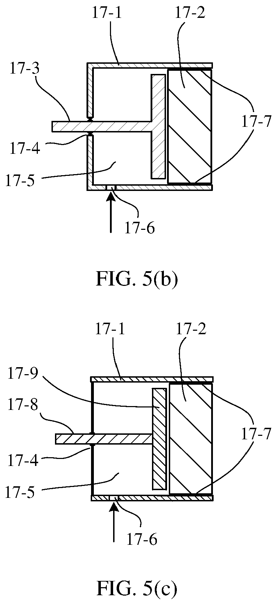

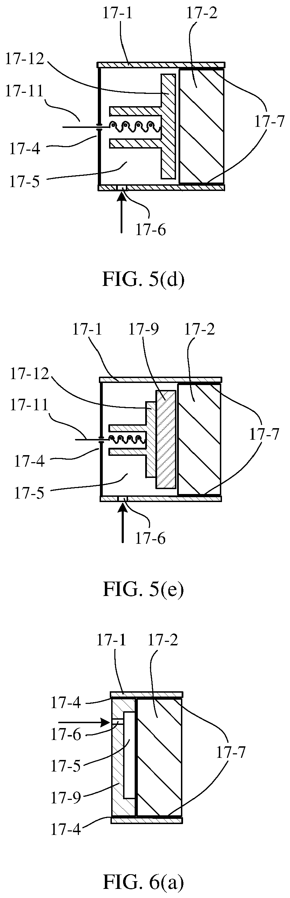

It should be noted that, in Embodiment 1, a radius of the second opening is set to be equal to a radius of the first opening, but this is not intended to limit the protection scope of this application. It should be understood that the second opening may be circular, or may be in another shape based on different sealing apparatuses or different transmission apparatuses. Further, a radius of the second opening may be less than a radius of the hydraulic cylinder body (17-1). Optionally, a radius of the second opening may be equal to a radius of the hydraulic cylinder body (17-1). When the radius of the second opening is equal to the radius of the hydraulic cylinder body (17-1), as shown in FIG. 5(a), machining and assembly can be simplified. When the radius of the second opening is less than the radius of the hydraulic cylinder body (17-1), as shown in FIG. 5(b), structural strength of the hydraulic cylinder body (17-1) can be improved, and a sealing effect can also be improved, so that the hydraulic cylinder can bear larger oil pressure in the cylinder. In Embodiment 1, the second sealing component (17-7) is disposed between an inner circumferential surface of the hydraulic cylinder body and an outer circumferential surface of the piston for sealing, to not only prevent leakage of oil inside the hydraulic cylinder but also prevent external dust and the like from entering the hydraulic cylinder. Optionally, the first sealing component (17-4) or the second sealing component (17-7) may include a plurality of sealing rings, and the plurality of sealing rings are disposed in parallel on the circumferential surface of the piston, to achieve a better sealing effect.

FIG. 4(b) is a schematic diagram of a possible implementation of a braking apparatus according to Embodiment 2 of this application. As shown in FIG. 4(b), the braking apparatus includes a drive mechanism, a planetary reduction mechanism, a wheel cylinder, and a braking actuator mechanism.

In Embodiment 2, the wheel cylinder includes a hydraulic cylinder body (17-1), a piston (17-2), a first sealing component (17-4) and a second sealing component (17-7), a ball screw (17-11), and a screw nut (17-12). The hydraulic cylinder body (17-1) is of a hollow cylinder shape, provided with a first opening and a second opening respectively at two ends. The piston (17-2) is disposed in the hydraulic cylinder body (17-1) and is located at the first opening. The first sealing component (17-4) covers the second opening. The second sealing component (17-7) is disposed between the hydraulic cylinder body (17-1) and the piston (17-2). The hydraulic cylinder body (17-1) is provided with a liquid flow opening (17-6), and the liquid flow opening (17-6) is located between the first sealing component (17-4) and the piston (17-2). The screw nut (17-12) is disposed in the hydraulic cylinder body (17-1). The ball screw (17-11) is connected to the screw nut (17-12) and passes through the first sealing component (17-4). The screw nut (17-12) and the ball screw (17-11) are matched in the hydraulic cylinder body (17-1). The liquid flow opening (17-6) and the screw nut (17-12) are on a same side of the piston (17-2). The hydraulic cylinder body (17-1), the piston (17-2), the ball screw (17-11), the first sealing component (17-4) and the second sealing component (17-7) are configured to form a hydraulic chamber (17-5)

In Embodiment 2, the drive mechanism (17-15) is a motor and includes an output shaft (17-15a).

In Embodiment 2, the braking actuator mechanism may be a disc brake, and the braking actuator mechanism includes a caliper (17-14) integrated with the wheel cylinder. The caliper (17-14) includes a support arm (17-14a) and a friction plate (17-14b), and other components are not shown.

In Embodiment 2, the planetary reduction mechanism includes: a sun gear (17-13a), a planet gear (17-13b), a ring gear (17-13c), and a planet carrier (17-13d).

In Embodiment 2, the motor output shaft (17-15a) of the drive mechanism is fastened to the sun gear (17-13a), and the planet carrier (17-13d) is fastened to the ball screw (17-11). The piston (17-2) of the wheel cylinder is configured to be enabled to move in a direction away from the liquid flow opening (17-6), driven by the screw nut (17-12), and to act on the braking actuator mechanism to implement braking. In addition, the piston (17-2) of the wheel cylinder may also move in the direction away from the liquid flow opening (17-6) under push of hydraulic oil, and act on the braking actuator mechanism to implement braking.

Compared with Embodiment 1, Embodiment 2 further includes a reduction mechanism, which can amplify an output torque of the drive mechanism. Under a same torque requirement, a drive motor with smaller output power can be matched.

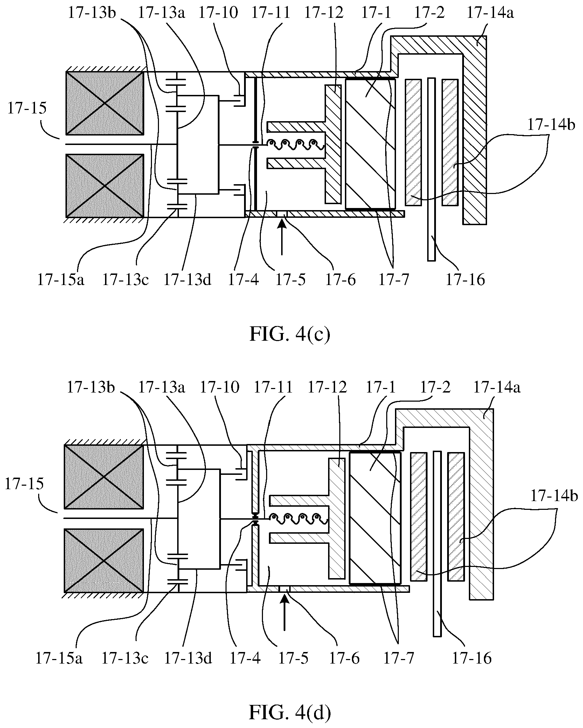

FIG. 4(c) is a schematic diagram of a possible implementation of a braking apparatus according to Embodiment 3 of this application. As shown in FIG. 4(c), the braking apparatus includes a drive mechanism, a planetary reduction mechanism, a locking mechanism, a wheel cylinder, and a braking actuator mechanism.

In Embodiment 3, the wheel cylinder includes a hydraulic cylinder body (17-1), a piston (17-2), a first sealing component (17-4) and a second sealing component (17-7), a ball screw (17-11), and a screw nut (17-12). The hydraulic cylinder body (17-1) is of a hollow cylinder shape, provided with a first opening and a second opening respectively at two ends. The piston (17-2) is disposed in the hydraulic cylinder body (17-1) and is located at the first opening. The first sealing component (17-4) covers the second opening. The second sealing component (17-7) is disposed between the hydraulic cylinder body (17-1) and the piston (17-2). The hydraulic cylinder body (17-1) is provided with a liquid flow opening (17-6), and the liquid flow opening (17-6) is located between the first sealing component (17-4) and the piston (17-2). The screw nut (17-12) is disposed in the hydraulic cylinder body (17-1). The ball screw (17-11) is connected to the screw nut (17-12) and passes through the first sealing component (17-4). The screw nut (17-12) and the ball screw (17-11) are matched in the hydraulic cylinder body (17-1). The liquid flow opening (17-6) and the screw nut (17-12) are on a same side of the piston (17-2). The hydraulic cylinder body (17-1), the piston (17-2), the ball screw (17-11), the first sealing component (17-4) and the second sealing component (17-7) are configured to form a hydraulic chamber (17-5)

In Embodiment 3, the drive mechanism (17-15) is a motor and includes an output shaft (17-15a).

In Embodiment 3, the braking actuator mechanism may be a disc brake, and the braking actuator mechanism includes a caliper (17-14) integrated with the wheel cylinder. The caliper (17-14) includes a support arm (17-14a) and a friction plate (17-14b), and other components are not shown.

In Embodiment 3, the planetary reduction mechanism includes: a sun gear (17-13a), a planet gear (17-13b), a ring gear (17-13c), and a planet carrier (17-13d).

In Embodiment 3, the motor output shaft (17-15a) of the drive mechanism is fastened to the sun gear (17-13a), and the planet carrier (17-13d) is fastened to the ball screw (17-11).

In Embodiment 3, the motor output shaft (17-15a) of the drive mechanism is fastened to the sun gear (17-13a), and the planet carrier (17-13d) is fastened to the ball screw (17-11). The piston (17-2) of the wheel cylinder is configured to be enabled to move in a direction away from the liquid flow opening (17-6), driven by the screw nut (17-12), and to act on the braking actuator mechanism to implement braking. In addition, the piston (17-2) of the wheel cylinder may also move in the direction away from the liquid flow opening (17-6) under push of hydraulic oil, and act on the braking actuator mechanism to implement braking.

Compared with Embodiment 2, Embodiment 3 further includes a locking mechanism (17-10), which is also referred to as a locking component (17-10) in this specification of this application. The locking component (17-10) includes a first working state and a second working state. When the locking component (17-10) is in the first working state, the locking component (17-10) and the planet carrier (17-13d) are coupled. In Embodiment 3, the locking component (17-10) is configured to lock the ball screw (17-11) by locking the planet carrier (17-13d). When the locking component (17-10) is in the second working state, the locking component (17-10) and the planet carrier (17-13d) are decoupled.

It should be noted that the locking function of the locking component helps protect the motor of the drive mechanism (17-15) under some specific working conditions. For example, when a vehicle needs to brake for a long time in a long downhill process, after the braking disc is clamped, the locking component is switched to a locked state. In this case, force of the piston (17-2) for pushing the friction plate (17-14b) to press on the braking disc (17-16) can be maintained, and therefore the motor may stop working, avoid damage caused by long-time stalling of the motor in a long downhill working condition, and prolong service life of the motor. In addition, after the vehicle stops stably and the braking disc is clamped, the locking component is switched to the locking state, and braking force is maintained, and parking braking can be completed.

It should be further noted that when the braking apparatus provided in this embodiment of this application is in the locked state, a hydraulic circuit may further continue to inject hydraulic oil into the hydraulic chamber (17-5), to further push the piston (17-2) to press the friction plate (17-14b) onto the braking disc (17-16) by increasing oil pressure in the hydraulic chamber (17-5), to meet a requirement for larger braking force.

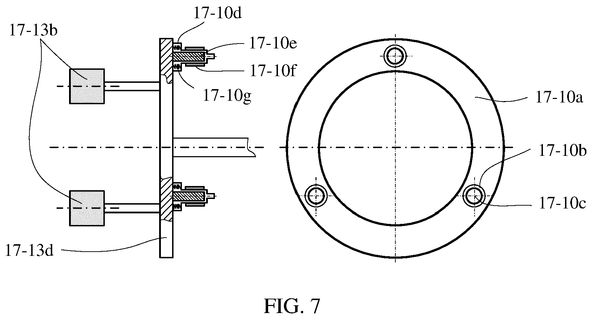

In a possible implementation, as shown in FIG. 7, the locking component (17-10) includes a locking disk (17-10a), an electromagnetic coil (17-10b), a groove (17-10c), a sliding sleeve (17-10d), a guide rod (17-10e), a permanent magnet (17-10f), and a reset spring (17-10g). The sliding sleeve (17-10d) is connected to the fixed guide rod (17-10e) through a spline, and the sliding sleeve (17-10d) may slide on the fixed guide rod (17-10e). A surface of the sliding sleeve (17-10d) is embedded with the permanent magnet (17-10f), and is provided with the reset spring (17-10g). The electromagnetic coil (17-10b) and the groove (17-10c) are disposed on the lock-up plate (17-10a).

In Embodiment 3, the guide rod (17-10e) is fastened to the planet carrier (17-13d), and the reset spring (17-10g) connects the sliding sleeve (17-10d) to the planet carrier (17-13d). The locking disc (17-10a) is fastened to the hydraulic cylinder body (17-1).

When forward electricity is supplied to the electromagnetic coil (17-10b), the sliding sleeve (17-10d) embedded with the permanent magnet on the surface moves along the guide rod (17-10e) in a direction of approaching the locking disc (17-10a) under action force of a magnetic field of the electromagnetic coil (17-10b), and snaps into the groove (17-10c) on the locking disc (17-10a), to complete locking. In this case, the locking component is corresponding to the first working state. When reverse electricity is supplied to the electromagnetic coil (17-10b), the sliding sleeve (17-10d) embedded with the permanent magnet on the surface moves along the guide rod (17-10e) in a direction away from the locking disc (17-10a) under action force of a magnetic field of the electromagnetic coil (17-10b), and moves back from the groove (17-10c) on the locking disc (17-10a), to complete unlocking. In this case, the locking component is corresponding to the second working state. When the vehicle is in a long downhill process or parked, to prevent overheating caused by long-time working or stalling of the motor, the locking component can lock the ball screw (17-11) and the screw nut (17-12) after the braking disc is clamped, to maintain a push force on the piston (17-2) and a press force of the friction plate on the braking disc. In this case, the drive mechanism (17-5) may stop working.

Optionally, a second permanent magnet (not shown) may be further disposed in the groove, so that the locking mechanism maintains a locked state after the sliding sleeve (17-10d) snaps into the groove (17-10c). Even if electricity supplied to the electromagnetic coil (17-10b) is broken, the locking mechanism may continue to maintain the locked state, and can be used for parking braking. When the reverse electricity is supplied to the electromagnetic coil (17-10b), and the magnetic field of the electromagnetic coil (17-10b) causes force that enables the sliding sleeve (17-10d) to move back from the groove (17-10c) and pulling force of the reset spring (17-10g) to be greater than force of a magnetic field of the second permanent magnet that enables the sliding sleeve (17-10d) to stay in the groove (17-10c), the sliding sleeve (17-10d) moves back from the groove (17-10c), to complete the unlocking.

The reset spring (17-10g) may restore the sliding sleeve (17-10d) to an initial position, and may ensure that the sliding sleeve (17-10d) maintains connection to a mechanism connected to the sliding sleeve (17-10d), to prevent the sliding sleeve (17-10d) from detaching from the mechanism connected to the sliding sleeve (17-10d). In a process of unlocking of the locking component, the reset spring (17-10g) may further serve as a cushion between the sliding sleeve (17-10d) and the mechanism connected to the sliding sleeve (17-10d), to reduce impact and noise.

It should be noted that the locking mechanism shown in this embodiment of this application is merely an example, and is not intended to limit the protection scope of this application. The locking mechanism has a plurality of implementations, for example, in another possible implementation. The locking mechanism (17-10) is a friction electromagnetic clutch. When the locking component (17-10) is in the first working state, the friction plate performs pressing and is locked through a friction force. When the locking component (17-10) is in the second working state, the friction plate is detached and unlocked.

In addition, the locking mechanism (17-10) in this embodiment of this application may further have other control logic. For example, when electricity is supplied to the electromagnetic coil (17-10b), the locking mechanism (17-10) performs locking; or when electricity supplied to the electromagnetic coil (17-10b) is broken, the locking mechanism (17-10) performs unlocking. However, it should be noted that, under this control logic, the locking mechanism cannot complete parking self-locking after electricity is broken.

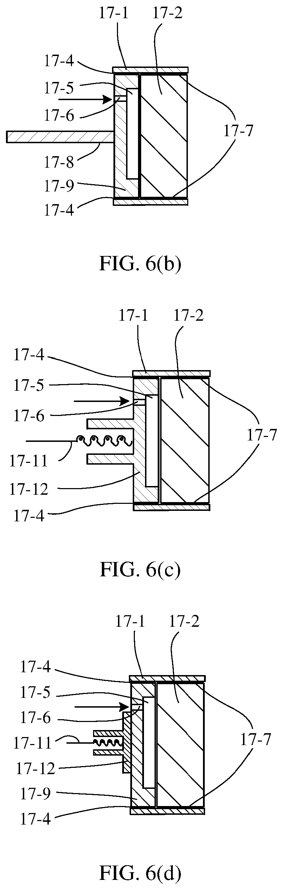

It should be noted that the braking apparatus provided in this embodiment of this application further has a plurality of other possible implementations. The wheel cylinder in the braking apparatus may be a hydraulic apparatus shown in any one of FIG. 5(a) to FIG. 5(e) or FIG. 6(a) to FIG. 6(e), or any other deformation that does not need to be obtained through creative efforts. For example, a possible implementation of a braking apparatus provided in an embodiment of this application is shown in FIG. 4(d). In this embodiment, a radius of a first sealing component (17-4) of the braking apparatus is less than a radius of a hydraulic cylinder body (17-1).

For another example, FIG. 4(e) is a possible implementation of a braking apparatus according to Embodiment 4 of this application. In Embodiment 4, the braking apparatus includes a drive mechanism, a planetary reduction mechanism, a locking mechanism, a wheel cylinder, and a braking actuator mechanism.

In Embodiment 4, the wheel cylinder of the braking apparatus is shown in FIG. 4(e), and includes a hydraulic cylinder body (17-1), a piston (17-2), a first sealing component (17-4) and a second sealing component (17-7), a ball screw (17-11), and a screw nut (17-12). The hydraulic cylinder body (17-1) is of a hollow cylinder shape, provided with a first opening and a second opening respectively at two ends. The piston (17-2) is disposed in the hydraulic cylinder body (17-1) and is located at the first opening. The first sealing component (17-4) is disposed between the hydraulic cylinder body (17-1) and the screw nut (17-12). The second sealing component (17-7) is disposed between the hydraulic cylinder body (17-1) and the piston (17-2). The screw nut (17-12) is provided with a liquid flow opening (17-6). The hydraulic cylinder body (17-1), the piston (17-2), the screw nut (17-12), the first sealing component (17-4) and the second sealing component (17-7) are configured to form a hydraulic chamber (17-5) In Embodiment 4, a groove is provided on an end face that is of the screw nut (17-12) and that faces the piston (17-2), and the groove communicates with the hydraulic chamber (17-5). When a gap between the piston (17-2) and the screw nut (17-12) is small, if the piston (17-2) is pushed through hydraulic pressure to provide braking force, the groove that is provided facilitates oil to quickly enter the hydraulic chamber (17-5).

In Embodiment 4, the drive mechanism (17-15) is a motor and includes an output shaft (17-15a).

In Embodiment 4, the braking actuator mechanism may be a disc brake, and the braking actuator mechanism includes a caliper (17-14) integrated with the wheel cylinder. The caliper (17-14) includes a support arm (17-14a) and a friction plate (17-14b), and other components are not shown.

In Embodiment 4, the planetary reduction mechanism includes: a sun gear (17-13a), a planet gear (17-13b), a ring gear (17-13c), and a planet carrier (17-13d).

In Embodiment 4, the locking mechanism (17-10) according to Embodiment 3 is further included.

In Embodiment 4, the motor output shaft (17-15a) of the drive mechanism is fastened to the sun gear (17-13a), and the planet carrier (17-13d) is fastened to the ball screw (17-11). The piston (17-2) of the wheel cylinder is configured to be enabled to move in a direction away from the liquid flow opening (17-6), driven by the screw nut (17-12), and to act on the braking actuator mechanism to implement braking. In addition, the piston (17-2) of the wheel cylinder may also move in the direction away from the liquid flow opening (17-6) under push of hydraulic oil, and act on the braking actuator mechanism to implement braking.

In addition, the braking apparatus provided in embodiments of this application may be any other variation that can be obtained without creative efforts. Details are not described in this embodiment of this application.

The following uses Embodiment 3 as an example. As shown in FIG. 4(c), an operating principle of a braking apparatus provided in this embodiment of this application is described below. The braking apparatus provided in this embodiment has an electro-mechanical braking function, an electro-hydraulic braking function, and a mechanical and hydraulic composite braking function.

First, as shown in FIG. 4(c), the braking apparatus provided in this embodiment of this application includes the electro-mechanical braking function. The motor of the drive mechanism (17-15) is controlled to drive the ball screw (17-11) to rotate, and the reduction mechanism (17-13) may be further included between the drive mechanism (17-15) and the ball screw (17-11). A rotatory motion of the ball screw (17-11) is converted into a linear motion through the screw nut (17-12), and the screw nut (17-12) moves in an axial direction of the hydraulic cylinder. The screw nut (17-12) can be controlled to approach or move away from the piston (17-2) in the hydraulic cylinder by controlling forward or reverse rotary motion of the motor of the drive mechanism (17-15). The screw nut (17-12) continuously approaches the piston (17-2) until touching the piston (17-2), and may further push the piston to press the friction plate (17-14b) on the braking disc (17-16) to perform a braking action.

Second, the braking apparatus provided in this embodiment of this application further includes the electro-hydraulic braking function. Under control of a vehicle hydraulic circuit, hydraulic oil enters the hydraulic chamber (17-5) from the liquid flow opening (17-6). The hydraulic oil in the hydraulic chamber (17-5) may push the piston (17-2) to press the friction plate (17-14b) on the braking disc (17-16) to perform a brake action.

Third, the braking apparatus provided in this embodiment of this application may further implement both the electro-mechanical braking and the electro-hydraulic braking functions. The motor of the drive mechanism (17-15) is controlled to drive the ball screw (17-11) to rotate and push the piston (17-2) through the screw nut (17-12) to press the friction plate (17-14b) on the braking disc (17-16). At the same time, an external hydraulic circuit is controlled to inject hydraulic oil into the hydraulic chamber (17-5), and the hydraulic oil pushes the piston (17-2) to further press the friction plate (17-14b) on the braking disc (17-16). Therefore, according to the braking apparatus provided in this embodiment of this application, the electro-mechanical braking and the electro-hydraulic braking can work simultaneously, to obtain a combined braking force of the electro-mechanical braking and the electro-hydraulic braking, to provide a better braking effect for a vehicle. This is very necessary in some working conditions. For example, in a case of emergency braking, when braking force generated by using only the electro-mechanical braking or using only the electro-hydraulic braking cannot meet a requirement of the vehicle for braking force, the braking apparatus provided in this embodiment of this application can fully utilize an advantage generated when the electro-mechanical braking and the electro-hydraulic braking work simultaneously, to better meet a requirement of the vehicle for a larger braking force.

A person skilled in the art may understand that the braking system may use a plurality of types of braking actuator mechanisms, including not only a disc brake, but also at least a drum brake. In a possible implementation, when the braking actuator mechanism is the drum brake, the braking actuator mechanism may include a braking shoe and a braking drum. At this time, the drum brake as the braking actuator mechanism can also realize the electro-mechanical brake function, the electro-hydraulic brake function, and the function of the electro-mechanical brake and the electro-hydraulic brake working simultaneously. Correspondingly, when the drum brake is used, the piston (17-2) pushes the braking shoe in the drum brake, so that the shoe is pressed on the braking drum, to generate braking force to implement speed reduction or parking.

A person skilled in the art may understand that, for the drum brake, a possible implementation may be a plurality of different types such as a leading shoe type and a trailing shoe type. Details are not described in this embodiment of this application. The disc braking mechanism or the drum braking mechanism in this embodiment of this application is merely used as an example of a possible implementation, and is not intended to limit the protection scope of this application.

It should be noted that the piston (17-2) is disposed in the hydraulic cylinder (17-1) and is located at the opening of the hydraulic cylinder (17-1), but the piston (17-2) may be partially slid out of the hydraulic cylinder (17-1) for driving.

It should be noted that, in this implementation, an end that is of the screw nut (17-12) in the hydraulic cylinder and that is close to the piston (17-2) can enable the hydraulic oil to be in contact with one side of the piston (17-2), which may be implemented in at least the following manner:

For example, in a possible implementation, the screw nut (17-12) and an inner wall of the hydraulic cylinder body are not sealed. For example, a radius of the screw nut (17-12) is less than an inner radius of the hydraulic cylinder body (17-1), so that the hydraulic oil may press the piston (17-2) after passing through a gap between the screw nut (17-12) and the inner wall of the hydraulic cylinder body (17-1), to further push the piston.

For another example, in another possible implementation, the screw nut (17-12) touches the inner wall of the hydraulic cylinder body (17-1), and a through hole exists between a surface that is of the screw nut (17-12) and that is away from the piston (17-2) and a surface that is of the screw nut (17-12) and that is close to the piston (17-2), so that the hydraulic oil can pass through the screw nut (17-12) through the through holes, to push the piston (17-2) to move in the axial direction of the hydraulic cylinder.

As described above, the braking apparatus provided in this embodiment of this application has a high integration level, and can integrate mechanical braking and hydraulic braking functions with a small size, to implement function integration and miniaturization.

Based on the braking apparatus provided in embodiments of this application, Embodiment 5 of this application provides a braking system.

FIG. 3 is a schematic diagram of a braking system according to Embodiment 5 of this application. As shown in FIG. 3, in Embodiment 5, the braking system may be divided into five modules, which are respectively a pedal braking module, a braking boost module, a front shaft braking module, a rear shaft braking module, and a braking control module.

In Embodiment 5, the pedal braking module may include a braking pedal (1), a liquid storage tank (2), a braking master cylinder (3), an on-off valve (4), and a pedal feedback simulator (5). The braking master cylinder (3) in this embodiment uses a series dual-chamber main cylinder: A first chamber of the braking master cylinder is connected to the pedal simulator (5) through the on-off valve (4), and pressure of the first chamber of the braking master cylinder (3) is transferred to an in-wheel braking circuit through a valve (11); and pressure of a second chamber of the braking master cylinder (3) is transferred to an in-wheel circuit through an on-off valve (10), to implement double-circuit backup of pressure of the braking master cylinder (3).

In Embodiment 5, the braking boost module may include a pressure ECU (6), a boost motor (7), and a linear pump (8). The pressure ECU (6) is electrically connected to the boost motor (7), and can control the boost motor (7) to rotate to drive a piston of the linear pump (8) to move, to establish braking pressure. The linear pump pressure module is connected to one end of a boost on-off valve (9), and the other end of the boost on-off valve (9) is connected to a braking hydraulic circuit. The boost on-off valve (9) may transfer the established pressure to an in-wheel braking circuit.

In Embodiment 5, the front shaft braking module mainly includes a pressure valve (12/14), a pressure-relief valve (13/15), and a front shaft braking assembly (19/20). In this embodiment, valve system structures such as the pressure valve (12/14) and the pressure-relief valve (13/15) are mainly used to adjust pressure of a front shaft wheel cylinder in functions such as anti-lock braking, anti-skid traction, and stability control. In this embodiment, the front shaft braking assembly (19/20) uses a disc brake that includes a wheel cylinder, a braking caliper, and a braking disc.

In Embodiment 5, a braking control module (16) is electrically connected to the pedal braking module, the braking boost module, the front shaft braking module, and the rear shaft braking module, and may perform state monitoring and control on the entire braking system (some monitoring and control relationships are not shown). The braking control module (16) starts or stops working by controlling one or more of the on-off valve (4/9/10/11), the pressure valve (12/14), the pressure-relief valve (13/15), the pedal braking module, the braking boost module, the front shaft braking module, and the rear shaft braking module, to implement functions such as braking force allocation and anti-lock braking.

It should be noted that the braking control module (16) may be a dedicated ECU set for a braking system, or may be a computing platform (150) of a vehicle (100), a vehicle control unit (132), or the like. This is not limited in this application. In an embodiment, the braking control module (16) is sometimes referred to as a braking ECU. The on-off valve (4/9/10/11) may be a solenoid valve, and is sometimes referred to as an electromagnetic valve in embodiments. When a difference between the two is not emphasized, the foregoing corresponding names represent a same object in embodiments, but are not intended to limit the protection scope of this application.

In Embodiment 5, the rear shaft braking module mainly includes a rear shaft braking assembly (21/22), and each rear shaft braking assembly includes any one of the braking apparatuses (17/18) described in Embodiment 1 to Embodiment 4, or any other deformation obtained without creative efforts. In this embodiment, a rear shaft braking assembly (17) on the left has same configuration as a rear shaft braking assembly (18) on the right. A liquid flow opening of the braking apparatus (17/18) is connected to the braking circuit.

It should be noted that the braking system provided in this embodiment of this application is not intended to limit the protection scope of this application. For example, a front wheel of the braking system may also use the braking apparatus provided in embodiments of this application.

With reference to a specific scenario, a working principle of the braking system provided in this embodiment of this application is described below.

The braking system provided in this embodiment of this application has a plurality of working modes. The braking system provided in this embodiment of this application is described as follows in four typical application scenarios: a conventional brake-by-wire mode (including energy recovery), an emergency braking mode, a redundant brake-by-wire mode, and a parking braking mode.

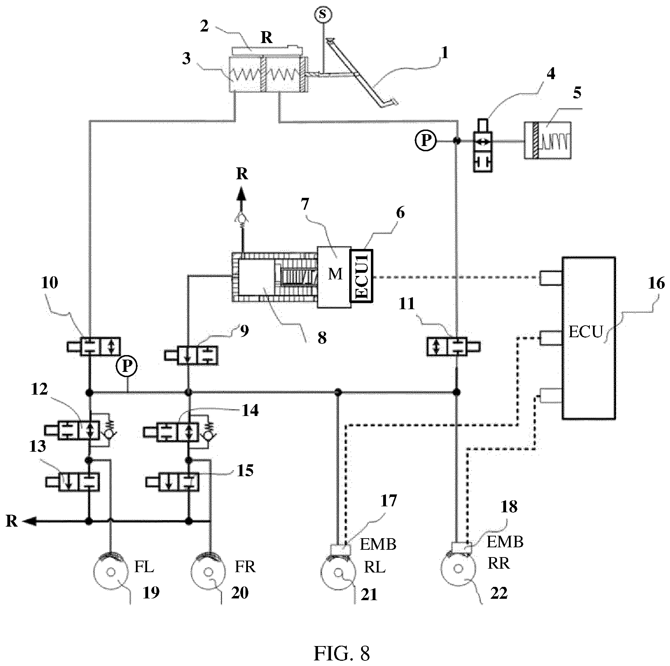

FIG. 8 is a schematic diagram of a working state of a braking system in a conventional brake-by-wire mode according to an embodiment of this application. As shown in FIG. 8, in a conventional brake-by-wire mode, when the system detects that the braking pedal (1) is displaced (that is, a driver steps down the braking pedal) or a vehicle system is unstable and a stability control requirement is generated, the on-off valve (4) is turned on to enable the pedal feedback simulator (5) to connect to the braking master cylinder (3), and oil in the braking master cylinder enters the pedal feedback simulator (5), to generate a sense of stepping a pedal for the driver. The boost on-off valve (9) is turned on, and the braking circuit is connected, the brake ECU (16) controls the boost motor (7) to work, to drive the linear pump (8) to establish pressure, and the hydraulic oil enters wheel cylinders of the front wheels through the pressure valves (12) and (14), and also enters wheel cylinders of rear wheels through the liquid flow opening of the braking apparatus (17/18).

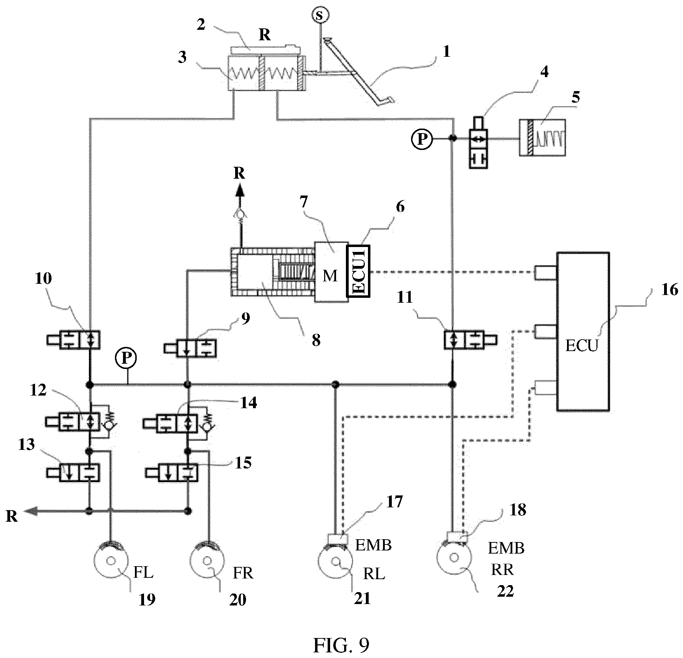

FIG. 9 is a schematic diagram of a working state of a braking system in an emergency braking mode according to an embodiment of this application. As shown in FIG. 9, in the emergency braking mode, when the braking ECU (16) detects an emergency anti-lock braking requirement, the on-off valve (4) enables the pedal sense simulator to connect to the braking master cylinder (3), and oil in the braking master cylinder (3) enters the pedal feedback simulator (5), to generate a sense of stepping a pedal for the driver. The boost on-off valve (9) is controlled to turn on, and the braking circuit is connected. The braking ECU (16) controls the boost motor (7) to work, to drive the linear pump (8) to establish pressure. In the front wheel, the pressure enters the wheel cylinder through the electromagnetic valve (12/14). The front wheel implements the anti-lock function by adjusting the pressure valve (12/14) and the pressure-relief valve (13/15). The rear wheel implements the anti-lock function through adjusting in-wheel braking force by the braking apparatus (17/18).

It should be noted that the pressure ECU (6) for controlling a motor may alternatively be integrated with the braking ECU (16), or implemented by a control module.

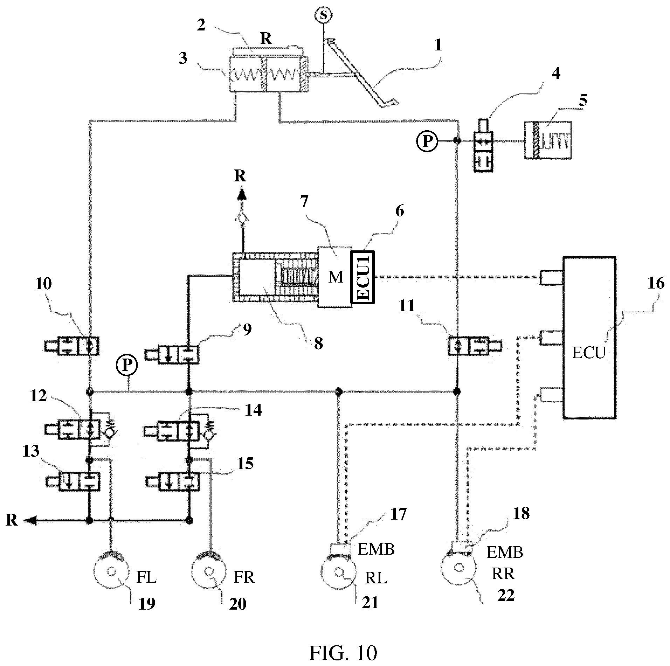

FIG. 10 is a schematic diagram of a working state of a braking system in a redundant braking mode according to an embodiment of this application. As shown in FIG. 10, in the redundant braking mode, for example, when the hydraulic booster braking modules (6, 7, 8) fail, the electromagnetic valve (4) is controlled to turn on so that the pedal sense simulator is connected to the braking master cylinder (3), and oil in the braking master cylinder enters the pedal feedback simulator (5), so as to generate a sense of stepping a pedal for the driver. The linear pump (8) stops working, and the main cylinder pressure valve (9) is turned off to disconnect the linear pump from the hydraulic circuit. The on-off valve (10/11) is turned on, and the braking circuit is connected. Pressure of the main cylinder enters the wheel cylinder of each wheel through the on-off valve (10/11), and the braking apparatus (17/18) is connected to provide additional braking force for the rear wheel.

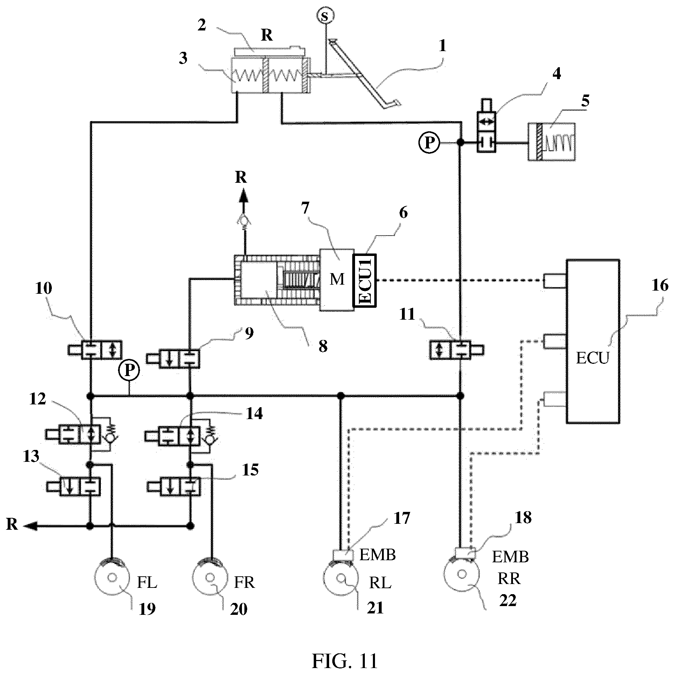

FIG. 11 is a schematic diagram of a working state of a braking system in a parking braking mode according to an embodiment of this application. As shown in FIG. 11, in the parking braking mode, when the braking control module (16) detects a parking requirement, a drive mechanism of the braking apparatus (17/18) drives a piston of the drive mechanism to push a braking actuator mechanism, provides parking braking force for the rear wheel, and maintains the parking braking force through a locking function. Other electromagnetic valves are open and the system does not provide hydraulic braking force.

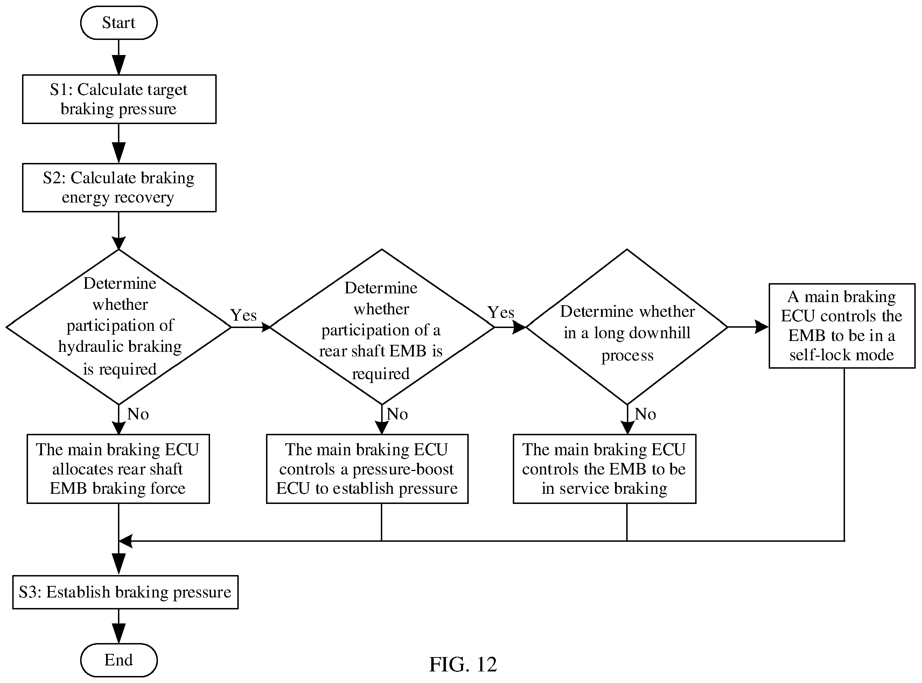

Based on the braking system provided in Embodiment 5, Embodiment 6 of this application provides a braking system control method. FIG. 12 is a schematic flowchart of a possible implementation of the method.

S1: Calculate target braking pressure.

The target braking pressure is obtained based on a current vehicle state or a driver braking intention. S21 is performed.

S21: Calculate energy recovery braking force.

For vehicles with a braking energy recovery function, the braking energy recovery function can provide braking force in a specific degree. After braking force generated through the braking energy recovery function is obtained, S22 is performed.

It should be noted that, when the vehicle does not have the braking energy recovery function, S21 may be omitted, that is, the braking force generated through the braking energy recovery function does not need to be calculated, and S22 is directly performed.

S22: Determine whether front shaft braking requires participation of hydraulic braking force.

After the braking force from a braking energy recovery part is obtained, it is determined whether the front shaft part requires the hydraulic braking force.

If the braking force generated through the braking energy recovery function is sufficient to meet a requirement of target braking force, to further ensure proper allocation of front shaft braking force and rear shaft braking force of the vehicle, optionally, the braking control module (16) allocates target mechanical braking force to the rear shaft braking apparatus (17/18), so that the front shaft braking force and the rear shaft braking force meet an allocation ratio of front shaft braking force and rear shaft braking force under a current braking policy. Afterward, S3 is performed. The braking apparatus (17/18) is controlled to generate braking pressure, and the braking process ends.

If the braking force generated through the braking energy recovery function is insufficient to meet the requirement of target braking force, S23 is performed.

S23: Determine whether participation of a rear shaft EMB is required.

The energy recovery braking force is obtained. When the energy recovery braking force is not sufficient to meet the requirement of target braking force, intervention of hydraulic braking force is required. It is determined whether combined force of the hydraulic braking force and the energy recovery braking force meets the requirement of target braking force.

When the combined force of the hydraulic braking force and the energy recovery braking force can meet the requirement of target braking force, participation of the rear shaft EMB is not required. The braking control module (16) controls the braking boost module to start to boost pressure, to provide hydraulic braking force for the front and rear shafts, and S3 is performed. After the target braking pressure is established, the braking process ends.

When the combined force of the hydraulic braking force and the energy recovery braking force cannot meet the requirement of target braking force, intervention of rear shaft mechanical braking force is further required. S24 is performed.

S24: Determine whether in a working condition that requires long-time braking, such as in a long downhill process.

If the vehicle is not in the working condition that requires long-time braking such as in a long downhill process, when the combined force of the hydraulic braking force and the energy recovery braking force (for a vehicle with a braking energy recovery function) cannot meet the requirement of the target braking force, or when the hydraulic braking force cannot meet the requirement of the target braking force (for a vehicle without a braking energy recovery function), the braking control module (16) controls the rear shaft braking apparatus (17/18) to generate mechanical braking force. In this way, combined force of the mechanical braking force, the hydraulic braking force and the energy recovery braking force (if any) meets the requirement of target braking force. At this time, the rear shaft braking apparatus (17/18) is in a service braking mode. Then, S3 is performed. After the target braking pressure is established, the braking process ends.

If the vehicle is in the working condition that requires long-time braking, such as in the long downhill process, the braking control module (16) controls the rear shaft braking apparatus (17/18) to generate mechanical braking force, and controls the braking apparatus to be in a locked state, to maintain a constant mechanical braking force, so as to meet a requirement for long-time braking, and avoid overheating caused by long-time working or stalling of the motor. Then, S3 is performed. After the target braking pressure is established, the braking process ends.

It should be noted that, when the braking apparatus (17/18) is in the locked state, the hydraulic braking force generated by the braking apparatus (17/18) may still change. Even if the hydraulic braking force generated by the braking apparatus (17/18) is 0, the mechanical braking force generated by the braking apparatus can still be maintained. Therefore, in the locked state, total braking force generated by the braking apparatus (17/18) can be changed, that is, when the mechanical braking force is maintained, a magnitude of the hydraulic braking force can be adjusted to adapt to a change of the target braking force.

It should be noted that, S1 and S2 may be completed by the braking control module (16). The braking control module (16) may be a dedicated ECU disposed for a braking system, or may be a computing platform (150) of a vehicle (100), a vehicle control unit (132), or the like. This is not limited in this application.

It should be noted that optionally, S1 and S2 may further be performed by a cloud server. For example, a high-definition map service and other vehicle or traffic signal information are obtained by using data provided by a cloud, and the cloud server calculates to determine whether a braking action needs to be performed currently and a magnitude of the braking force that is required for braking, and the vehicle executes a calculation result. Alternatively, a braking intention may be generated based on the information provided by the cloud, and a braking action may be further completed. Details are not described in this application.

In addition, it should be noted that, if the braking apparatus (17/18) does not have a locking function, S24 may be omitted. S3 may be directly performed. After braking pressure that meets the requirement of the target braking force is established, the braking process ends.

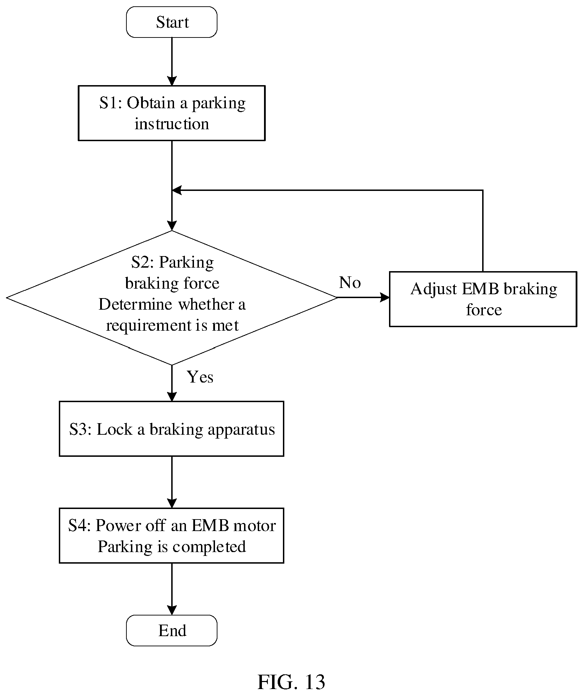

Based on the braking system provided in Embodiment 5, Embodiment 7 of this application provides a braking system control method. FIG. 13 is a schematic flowchart of a possible implementation of the method.

S1: Obtain a parking braking instruction.

A braking instruction or parking intention is obtained. S2 is performed.

S2: Determine whether parking braking force meets a requirement.

If the parking braking force meets the requirement, the braking apparatus (17/18) is locked. S3 is performed.

If the parking braking force does not meet the requirement, S21 is performed.

S21: The braking apparatus (17/18) adjusts mechanical braking force. Then, S2 is performed to continue to determine whether the braking force requirement is met.

S3: Lock the braking apparatus.

After the braking apparatus is locked, S4 is performed.

S4: Power off the drive motor of the braking apparatus, and parking is completed. The process ends.

As described above, some braking apparatuses and braking systems provided in embodiments of this application have at least the following features and advantages:
First, the braking apparatus provided in embodiments of this application integrates the mechanical braking function and the hydraulic braking function. The braking apparatus can separately provide mechanical braking force, and can also separately provide hydraulic braking force, and can also provide both mechanical braking force and hydraulic braking force, so that coupling between the hydraulic braking force and the mechanical braking force can be implemented. In addition, the mechanical braking function and the hydraulic braking function are coupled, and the braking apparatus provided in this embodiment of this application needs only one braking actuator mechanism set to implement mutual backup between the mechanical braking and the hydraulic braking. In addition, the braking apparatus provided in embodiments of this application can also significantly reduce demands for boost motors for electro-mechanical braking, reduce a quantity of electromagnetic valves in the whole braking system, and simplify the structure.
Second, a pedal braking function and a hydraulic boosting function are decoupled. The front shaft braking energy recovery function can be fully used, and more redundant backup is provided. For example, pedal braking and hydraulic boosting braking are decoupled, the mechanical braking may be used when the hydraulic braking fails, and the pedal braking may still be used when rear wheel mechanical braking fails. A three-way redundancy function: electro-hydraulic braking, electro-mechanical braking and pedal braking can be implemented. In addition, this helps decoupled control of the front shaft braking force and the rear shaft braking force in a process of energy recovery, to provide improved pedal feedback in terms of a foot sense.
Third, some braking apparatuses provided in embodiments of this application further have the locking component, so that parking braking can be implemented, a parking braking apparatus is not used, a size of the braking apparatus can be reduced, and an overall vehicle design can be simplified. In addition, the drive mechanism of the braking apparatus can also be effectively protected under a long downhill condition.
Fourth, the pressure apparatus provides hydraulic braking force for the front wheel and the rear wheel. In the front wheel, functions such as anti-lock braking and stability control are implemented by adjusting the hydraulic valve. In the rear wheel, functions such as anti-lock braking and stability control are implemented through cooperation of the hydraulic braking and the electro-mechanical braking.

According to the hydraulic apparatus, the braking apparatus, and the braking system provided in embodiments of this application, a component that can be driven by an external motor to push the piston to move in the hydraulic cylinder is disposed in the hydraulic cylinder, to implement hydraulic braking and brake-by-wire that are coupled. In other words, a system redundancy function can be provided, and the hydraulic apparatus can also be miniaturized. Further, the hydraulic apparatus is integrated with the locking component (17-10), a parking braking function can be implemented, and a separate parking braking system is not needed, so that complexity of the entire braking system is reduced. The hydraulic apparatus provided in embodiments of this application may replace a conventional wheel cylinder, and is applied to a vehicle braking system. The hydraulic apparatus may provide separate hydraulic braking, separate mechanical braking, or hydraulic braking and mechanical braking that are combined, to implement functions including common braking, emergency braking, anti-lock braking, parking braking, and the like, fully utilize space in a wheel, optimize a braking effect, and improve a redundancy backup capability of the braking system.

## Claims

1. A hydraulic apparatus, comprising: a hydraulic cylinder body (17-1), a piston (17-2), a push assembly (17-3) and a first sealing component (17-4), wherein
the hydraulic cylinder body (17-1) is of a hollow cylinder shape, provided with a first opening and a second opening respectively at two ends;
the piston (17-2) is disposed in the hydraulic cylinder body (17-1) and is located at the first opening;
the first sealing component (17-4) covers the second opening; and the hydraulic cylinder body (17-1), the piston (17-2), and the first sealing component (17-4) are configured to form a hydraulic chamber (17-5);
the hydraulic cylinder body (17-1) is provided with a liquid flow opening (17-6), and the liquid flow opening (17-6) is located between the first sealing component (17-4) and the piston (17-2);
the push assembly (17-3) is disposed in the hydraulic cylinder body (17-1); and the liquid flow opening (17-6) and the push assembly (17-3) are located on a same side of the piston (17-2); and
the piston (17-2) is configured to be enabled to move in the hydraulic cylinder body (17-1), driven by the push assembly (17-3),
wherein the push assembly (17-3) comprises a transmission component (17-8) and a push block (17-9); and the transmission component (17-8) passes through the first sealing component (17-4),
wherein the apparatus further comprises a locking component (17-10), wherein the locking component (17-10) is located outside the hydraulic cylinder body (17-1); and the locking component (17-10) comprises a first working state and a second working state; when the locking component (17-10) is in the first working state, the locking component (17-10) and the transmission component (17-8) are coupled to lock the transmission component (17-8) such that the locking component (17-10) and the transmission component (17-8) keep relatively static and the locking component prevents the transmission component (17-8) from changing a movement state; and when the locking component (17-10) is in the second working state, the locking component (17-10) and the transmission component (17-8) are decoupled;
**characterized in that** one of a) and b) is further provided:
a) the transmission component (17-8) comprises a ball screw (17-11) and a screw nut (17-12); the ball screw (17-11) passes through the first sealing component (17-4), the screw nut (17-12) and the ball screw (17-11) are matched in the hydraulic cylinder body (17-1); or
b) the transmission component (17-8) is a ball screw, and the push block (17-9) is a screw nut (17-12); the ball screw (17-11) passes through the first sealing component (17-4); and the screw nut (17-12) and the ball screw (17-11) are matched in the hydraulic cylinder body (17-1);
and wherein, for any of a) and b), the apparatus further comprises a planetary reducer (17-13), wherein the planetary reducer (17-13) is located outside the hydraulic cylinder body (17-1) and is connected to the ball screw (17-11); wherein the planetary reducer (17-13) comprises a sun gear (17-13a), a planet gear (17-13b), a ring gear (17-13c) and a planet carrier (17-13d);
wherein the screw nut (17-12) is fastened to the push block (17-9) and the planet carrier (17-13d) is fastened to the ball screw; and
wherein when the locking component (17-10) is in the first working state, the locking component (17-10) and the planet carrier (17-13d) are coupled, and the locking component (17-10) is configured to lock the ball screw (17-11) by locking the planet carrier (17-13d); and when the locking component (17-10) is in the second working state, the locking component (17-10) and the planet carrier (17-13d) are decoupled.

2. The apparatus according to claim 1, further comprising a second sealing component (17-7), wherein the second sealing component (17-7) is disposed between the hydraulic cylinder body (17-1) and the piston (17-2).

3. The apparatus according to claim 1, wherein the push assembly (17-3) is configured to convert a rotary motion of the transmission component (17-8) into a linear motion of the push block (17-9).

4. A braking system, comprising: a braking boost assembly, a first oil line, and a braking apparatus, wherein
the braking apparatus comprises a drive mechanism (17-15), a wheel cylinder and a braking actuator mechanism, the wheel cylinder comprises the hydraulic apparatus according to claim 1, wherein the wheel cylinder further comprises a second sealing component (17-7), the second sealing component (17-7) is disposed between the hydraulic cylinder body (17-1) and the piston (17-2), the transmission component (17-8) is connected to the push block (17-9), the hydraulic cylinder body (17-1), the piston (17-2), and the transmission component (17-8), the first sealing component (17-4) and the second sealing component (17-7) are configured to form a hydraulic chamber (17-5)
the drive mechanism (17-15) comprises an output shaft (17-15a), and the output shaft (17-15a) is connected to the transmission component (17-8); and
the piston (17-2) is configured to be enabled to move in a direction away from the liquid flow opening (17-6), driven by the push block (17-9), and to act on the braking actuator mechanism to implement braking;
the braking boost assembly comprises a main boost cylinder (8), the main boost cylinder comprises a first cylinder body and a first piston, and the first piston is disposed in the first cylinder body; and the first piston and the first cylinder body form a first hydraulic chamber; and the main boost cylinder is provided with a first liquid flow opening, and the first liquid flow opening communicates with the first hydraulic chamber; and
the first hydraulic chamber is connected to the hydraulic chamber (17-5) of the wheel cylinder through the first oil line; one end of the first oil line is connected to the liquid flow opening (17-6) of the wheel cylinder, and the other end of the first oil line is connected to the first liquid flow opening.

5. A braking control method, applied to the braking system according to claim 4, wherein
the braking boost assembly further comprises a boost motor and a pressure control unit (6); the first piston moves in the main boost cylinder, driven by the boost motor, to change a volume of the first hydraulic chamber; and
the braking control method comprises:
calculating target braking force required;
sending a first instruction to the pressure control unit (6), wherein the first instruction instructs the pressure control unit (6) to control the boost motor to drive the first piston to reduce the volume of the first hydraulic chamber, so that a braking fluid in the first hydraulic chamber flows into the hydraulic chamber (17-5) through the first oil line, after passing through the first liquid flow opening, to drive the piston (17-2) to move, so as to act on the braking actuator mechanism to provide first braking force; and
sending a second instruction to the drive mechanism (17-15), wherein the second instruction instructs the drive mechanism (17-15) to drive the piston (17-2) to move, by using the output shaft (17-15a), the transmission component (17-8), and the push block (17-9), to provide second braking force on the braking actuator mechanism, wherein
the first braking force and the second braking force are coupled to meet the target braking force.

6. The method according to claim 5, wherein the braking control method further comprises:
detecting a parking braking requirement;
sending a third instruction to the drive mechanism (17-15), wherein the third instruction instructs the drive mechanism (17-15) to drive the piston (17-2) to move, by using the output shaft (17-15a), the transmission component (17-8), and the push block (17-9), to provide third braking force that meets the parking braking requirement by acting on the braking actuator mechanism; and
sending a fourth instruction to the locking component (17-10), wherein the fourth instruction instructs the locking component (17-10) to switch from the second working state to the first working state.

7. A computer readable medium, comprising programmable instructions, wherein when the programmable instructions are invoked, the method according to claim 5 can be performed.

## Patentansprüche

1. Hydraulikvorrichtung, umfassend: einen Hydraulikzylinderkörper (17-1), einen Kolben (17-2), eine Schubanordnung (17-3) und eine erste Dichtungskomponente (17-4), wobei
der Hydraulikzylinderkörper (17-1) eine Hohlzylinderform aufweist, die an zwei Enden jeweils mit einer ersten Öffnung und einer zweiten Öffnung versehen ist;
der Kolben (17-2) in dem Hydraulikzylinderkörper (17-1) angeordnet ist und sich an der ersten Öffnung befindet;
die erste Dichtungskomponente (17-4) die zweite Öffnung abdeckt; und der Hydraulikzylinderkörper (17-1), der Kolben (17-2) und die erste Dichtungskomponente (17-4) dazu ausgelegt sind, eine Hydraulikkammer (17-5) zu bilden;
der Hydraulikzylinderkörper (17-1) mit einer Flüssigkeitsdurchflussöffnung (17-6) versehen ist und sich die Flüssigkeitsdurchflussöffnung (17-6) zwischen der ersten Dichtungskomponente (17-4) und dem Kolben (17-2) befindet;
die Schubanordnung (17-3) in dem Hydraulikzylinderkörper (17-1) angeordnet ist; und sich die Flüssigkeitsdurchflussöffnung (17-6) und die Schubanordnung (17-3) auf einer gleichen Seite des Kolbens (17-2) befinden; und
der Kolben (17-2) so ausgelegt ist, dass er sich in dem Hydraulikzylinderkörper (17-1), angetrieben durch die Schubanordnung (17-3), bewegen kann,
wobei die Schubanordnung (17-3) eine Getriebekomponente (17-8) und einen Schubblock (17-9) umfasst; und die Getriebekomponente (17-8) durch die erste Dichtungskomponente (17-4) verläuft,
wobei die Vorrichtung ferner eine Verriegelungskomponente (17-10) umfasst, wobei sich die Verriegelungskomponente (17-10) außerhalb des Hydraulikzylinderkörpers (17-1) befindet; und die Verriegelungskomponente (17-10) einen ersten Betriebszustand und einen zweiten Betriebszustand umfasst; wobei, wenn sich die Verriegelungskomponente (17-10) in dem ersten Betriebszustand befindet, die Verriegelungskomponente (17-10) und die Getriebekomponente (17-8) gekoppelt sind, um die Getriebekomponente (17-8) derart zu verriegeln, dass die Verriegelungskomponente (17-10) und die Getriebekomponente (17-8) relativ statisch bleiben und die Verriegelungskomponente verhindert, dass die Getriebekomponente (17-8) einen Bewegungszustand ändert; und wobei, wenn sich die Verriegelungskomponente (17-10) in dem zweiten Betriebszustand befindet, die Verriegelungskomponente (17-10) und die Getriebekomponente (17-8) entkoppelt sind;
**dadurch gekennzeichnet, dass** ferner eines von a) und b) vorgesehen ist:
a) die Getriebekomponente (17-8) umfasst eine Kugelgewindespindel (17-11) und eine Schraubenmutter (17-12); wobei die Kugelgewindespindel (17-11) durch die erste Dichtungskomponente (17-4) verläuft, wobei die Schraubenmutter (17-12) und die Kugelgewindespindel (17-11) in dem Hydraulikzylinderkörper (17-1) aufeinander abgestimmt sind; oder
b) die Getriebekomponente (17-8) ist eine Kugelgewindespindel und der Schubblock (17-9) ist eine Schraubenmutter (17-12); wobei die Kugelgewindespindel (17-11) durch die erste Dichtungskomponente (17-4) verläuft; und die Schraubenmutter (17-12) und die Kugelgewindespindel (17-11) in dem Hydraulikzylinderkörper (17-1) aufeinander abgestimmt sind;
und wobei für eines von a) und b) die Vorrichtung ferner ein Planetenuntersetzungsgetriebe (17-13) umfasst, wobei sich das Planetenuntersetzungsgetriebe (17-13) außerhalb des Hydraulikzylinderkörpers (17-1) befindet und mit der Kugelgewindespindel (17-11) verbunden ist; wobei das Planetenuntersetzungsgetriebe (17-13) ein Sonnenrad (17-13a), ein Planetenrad (17-13b), ein Hohlrad (17-13c) und einen Planetenträger (17-13d) umfasst;
wobei die Schraubenmutter (17-12) an dem Schubblock (17-9) befestigt ist und der Planetenträger (17-13d) an der Kugelgewindespindel befestigt ist; und
wobei, wenn sich die Verriegelungskomponente (17-10) in dem ersten Betriebszustand befindet, die Verriegelungskomponente (17-10) und der Planetenträger (17-13d) gekoppelt sind, und die Verriegelungskomponente (17-10) dazu ausgelegt ist, die Kugelgewindespindel (17-11) durch Verriegeln des Planetenträgers (17-13d) zu verriegeln; und wenn sich die Verriegelungskomponente (17-10) in dem zweiten Betriebszustand befindet, die Verriegelungskomponente (17-10) und der Planetenträger (17-13d) entkoppelt sind.

2. Vorrichtung nach Anspruch 1, ferner umfassend eine zweite Dichtungskomponente (17-7), wobei die zweite Dichtungskomponente (17-7) zwischen dem Hydraulikzylinderkörper (17-1) und dem Kolben (17-2) angeordnet ist.

3. Vorrichtung nach Anspruch 1, wobei die Schubanordnung (17-3) dazu ausgelegt ist, eine Drehbewegung der Getriebekomponente (17-8) in eine lineare Bewegung des Schubblocks (17-9) umzuwandeln.

4. Bremssystem, umfassend: eine Bremskraftverstärkungsanordnung, eine erste Ölleitung und eine Bremsvorrichtung, wobei
die Bremsvorrichtung einen Antriebsmechanismus (17-15), einen Radzylinder und einen Bremsaktuatormechanismus umfasst, wobei der Radzylinder die Hydraulikvorrichtung nach Anspruch 1 umfasst, wobei der Radzylinder ferner eine zweite Dichtungskomponente (17-7) umfasst, wobei die zweite Dichtungskomponente (17-7) zwischen dem Hydraulikzylinderkörper (17-1) und dem Kolben (17-2) angeordnet ist, wobei die Getriebekomponente (17-8) mit dem Schubblock (17-9) verbunden ist, wobei der Hydraulikzylinderkörper (17-1), der Kolben (17-2) und die Getriebekomponente (17-8), die erste Dichtungskomponente (17-4) und die zweite Dichtungskomponente (17-7) dazu ausgelegt sind, eine Hydraulikkammer (17-5) zu bilden
der Antriebsmechanismus (17-15) eine Ausgangswelle (17-15a) umfasst und die Ausgangswelle (17-15a) mit der Getriebekomponente (17-8) verbunden ist; und
der Kolben (17-2) dazu ausgelegt ist, sich, angetrieben durch den Schubblock (17-9), in einer Richtung von der Flüssigkeitsdurchflussöffnung (17-6) weg bewegen zu können und auf den Bremsaktuatormechanismus einzuwirken, um eine Bremsung zu implementieren;
die Bremskraftverstärkungsanordnung einen Hauptverstärkungszylinder (8) umfasst, wobei der Hauptverstärkungszylinder einen ersten Zylinderkörper und einen ersten Kolben umfasst und der erste Kolben in dem ersten Zylinderkörper angeordnet ist; und der erste Kolben und der erste Zylinderkörper eine erste Hydraulikkammer bilden; und der Hauptverstärkungszylinder mit einer ersten Flüssigkeitsdurchflussöffnung versehen ist und die erste Flüssigkeitsdurchflussöffnung mit der ersten Hydraulikkammer kommuniziert; und
die erste Hydraulikkammer durch die erste Ölleitung mit der Hydraulikkammer (17-5) des Radzylinders verbunden ist; wobei ein Ende der ersten Ölleitung mit der Flüssigkeitsdurchflussöffnung (17-6) des Radzylinders verbunden ist und das andere Ende der ersten Ölleitung mit der ersten Flüssigkeitsdurchflussöffnung verbunden ist.

5. Bremssteuerverfahren, das auf das Bremssystem nach Anspruch 4 angewendet wird, wobei
die Bremskraftverstärkungsanordnung ferner einen Verstärkungsmotor und eine Drucksteuereinheit (6) umfasst; wobei sich der erste Kolben, angetrieben durch den Verstärkungsmotor, in dem Hauptverstärkungszylinder bewegt, um ein Volumen der ersten Hydraulikkammer zu ändern; und
das Bremssteuerverfahren Folgendes umfasst:
Berechnen der erforderlichen Zielbremskraft;
Senden einer ersten Anweisung an die Drucksteuereinheit (6), wobei die erste Anweisung die Drucksteuereinheit (6) anweist, den Verstärkungsmotor zu steuern, um den ersten Kolben anzutreiben, um das Volumen der ersten Hydraulikkammer zu reduzieren, so dass ein Bremsfluid in der ersten Hydraulikkammer durch die erste Ölleitung in die Hydraulikkammer (17-5) fließt, nachdem es durch die erste Flüssigkeitsdurchflussöffnung strömt, um den Kolben (17-2) anzutreiben, so dass er sich bewegt, um auf den Bremsaktuatormechanismus einzuwirken, um eine erste Bremskraft bereitzustellen; und
Senden einer zweiten Anweisung an den Antriebsmechanismus (17-15), wobei die zweite Anweisung den Antriebsmechanismus (17-15) anweist, den Kolben (17-2) anzutreiben, um unter Verwendung der Ausgangswelle (17-15a) die Getriebekomponente (17-8) und den Schubblock (17-9) zu bewegen, um eine zweite Bremskraft auf den Bremsaktuatormechanismus bereitzustellen, wobei
die erste Bremskraft und die zweite Bremskraft gekoppelt werden, um die Zielbremskraft zu erreichen.

6. Verfahren nach Anspruch 5, wobei das Bremssteuerverfahren ferner Folgendes umfasst:
Detektieren einer Feststellbremsanforderung;
Senden einer dritten Anweisung an den Antriebsmechanismus (17-15), wobei die dritte Anweisung den Antriebsmechanismus (17-15) anweist, den Kolben (17-2) anzutreiben, um unter Verwendung der Ausgangswelle (17-15a) die Getriebekomponente (17-8) und den Schubblock (17-9) zu bewegen, um eine dritte Bremskraft, die die Feststellbremsanforderung erfüllt, durch Einwirken auf den Bremsaktuatormechanismus bereitzustellen; und
Senden einer vierten Anweisung an die Verriegelungskomponente (17-10), wobei die vierte Anweisung die Verriegelungskomponente (17-10) anweist, von dem zweiten Betriebszustand in den ersten Betriebszustand umzuschalten.

7. Computerlesbares Medium, das programmierbare Anweisungen umfasst, wobei, wenn die programmierbaren Anweisungen aufgerufen werden, das Verfahren nach Anspruch 5 durchgeführt werden kann.

## Revendications

1. Appareil hydraulique, comprenant : un corps de cylindre hydraulique (17-1), un piston (17-2), un ensemble poussoir (17-3), et un premier composant d'étanchéité (17-4), dans lequel
le corps de cylindre hydraulique (17-1) est d'une forme de cylindre creuse, pourvu d'une première ouverture et d'une seconde ouverture respectivement à deux extrémités ;
le piston (17-2) est disposé dans le corps de cylindre hydraulique (17-1) et est situé au niveau de la première ouverture ;
le premier composant d'étanchéité (17-4) couvre la seconde ouverture ; et le corps de cylindre hydraulique (17-1), le piston (17-2), et le premier composant d'étanchéité (17-4) sont configurés pour former une chambre hydraulique (17-5) ;
le corps de cylindre hydraulique (17-1) est pourvu d'une ouverture d'écoulement de liquide (17-6), et l'ouverture d'écoulement de liquide (17-6) est située entre le premier composant d'étanchéité (17-4) et le piston (17-2) ;
l'ensemble poussoir (17-3) est disposé dans le corps de cylindre hydraulique (17-1) ; et l'ouverture d'écoulement de liquide (17-6) et l'ensemble poussoir (17-3) sont situés sur un même côté du piston (17-2) ; et
le piston (17-2) est configuré pour être permis de se mouvoir dans le corps de cylindre hydraulique (17-1), entraîné par l'ensemble poussoir (17-3),
dans lequel l'ensemble poussoir (17-3) comprend un composant de transmission (17-8) et un bloc poussoir (17-9) ; et le composant de transmission (17-8) passe à travers le premier composant d'étanchéité (17-4),
dans lequel l'appareil comprend en outre un composant de verrouillage (17-10), dans lequel le composant de verrouillage (17-10) est situé à l'extérieur du corps de cylindre hydraulique (17-1) ; et le composant de verrouillage (17-10) comprend un premier état de fonctionnement et un second état de fonctionnement ; lorsque le composant de verrouillage (17-10) est dans le premier état de fonctionnement, le composant de verrouillage (17-10) et le composant de transmission (17-8) sont couplés pour verrouiller le composant de transmission (17-8) de manière telle que le composant de verrouillage (17-10) et le composant de transmission (17-8) restent relativement statiques et le composant de verrouillage empêche le composant de transmission (17-8) de changer d'état de mouvement ; et, lorsque le composant de verrouillage (17-10) est dans le second état de fonctionnement, le composant de verrouillage (17-10) et le composant de transmission (17-8) sont découplés ;
**caractérisé en ce qu'**un de a) et de b) est prévu en outre :
a) le composant de transmission (17-8) comprend une vis sphérique (17-11) et un écrou de vis (17-12) ; la vis sphérique (17-11) passe à travers le premier composant d'étanchéité (17-4), l'écrou de vis (17-12) et la vis sphérique (17-11) sont assortis dans le corps de cylindre hydraulique (17-1) ; ou
b) le composant de transmission (17-8) est une vis sphérique, et le bloc poussoir (17-9) est un écrou de vis (17-12) ; la vis sphérique (17-11) passe à travers le premier composant d'étanchéité (17-4) ; et l'écrou de vis (17-12) et la vis sphérique (17-11) sont assortis dans le corps de cylindre hydraulique (17-1) ;
et dans lequel, pour un quelconque de a) et de b), l'appareil comprend en outre un réducteur planétaire (17-13), dans lequel le réducteur planétaire (17-13) est situé à l'extérieur du corps de cylindre hydraulique (17-1) et est raccordé à la vis sphérique (17-11) ; dans lequel le réducteur planétaire (17-13) comprend une pièce d'engrenage solaire (17-13a), une pièce d'engrenage planétaire (17-13b), une pièce d'engrenage couronne (17-13c), et un porte-planétaire (17-13d) ;
dans lequel l'écrou de vis (17-12) est fixé au bloc poussoir (17-9) et le porte-planétaire (17-13d) est fixé à la vis sphérique ; et
dans lequel, lorsque le composant de verrouillage (17-10) est dans le premier état de fonctionnement, le composant de verrouillage (17-10) et le porte-planétaire (17-13d) sont couplés, et le composant de verrouillage (17-10) est configuré pour verrouiller la vis sphérique (17-11) en verrouillant le porte-planétaire (17-13d) ; et, lorsque le composant de verrouillage (17-10) est dans le second état de fonctionnement, le composant de verrouillage (17-10) et le porte-planétaire (17-13d) sont découplés.

2. Appareil selon la revendication 1, comprenant en outre un second composant d'étanchéité (17-7), dans lequel le second composant d'étanchéité (17-7) est disposé entre le corps de cylindre hydraulique (17-1) et le piston (17-2).

3. Appareil selon la revendication 1, dans lequel l'ensemble poussoir (17-3) est configuré pour convertir un mouvement rotatif du composant de transmission (17-8) en mouvement linéaire du bloc poussoir (17-9).

4. Système de freinage, comprenant : un ensemble de servofreinage, une première conduite d'huile, et un appareil de freinage, dans lequel
l'appareil de freinage comprend un mécanisme d'entraînement (17-15), un cylindre de roue, et un mécanisme actionneur de freinage, le cylindre de roue comprend l'appareil hydraulique selon la revendication 1, dans lequel le cylindre de roue comprend en outre un second composant d'étanchéité (17-7), le second composant d'étanchéité (17-7) est disposé entre le corps de cylindre hydraulique (17-1) et le piston (17-2), le composant de transmission (17-8) est raccordé au bloc poussoir (17-9), le corps de cylindre hydraulique (17-1), le piston (17-2), et le composant de transmission (17-8), le premier composant d'étanchéité (17-4), et le second composant d'étanchéité (17-7) sont configurés pour former une chambre hydraulique (17-5),
le mécanisme d'entraînement (17-15) comprend un arbre de sortie (17-15a), et l'arbre de sortie (17-15a) est raccordé au composant de transmission (17-8) ; et
le piston (17-2) est configuré pour être permis de se mouvoir dans une direction en éloignement de l'ouverture d'écoulement de liquide (17-6), entraîné par le bloc poussoir (17-9), et pour agir sur le mécanisme actionneur de freinage pour mettre en œuvre un freinage ;
l'ensemble de servofreinage comprend un cylindre de servofrein principal (8), le cylindre de servofrein principal comprend un premier corps de cylindre et un premier piston, et le premier piston est disposé dans le premier corps de cylindre ; et le premier piston et le premier corps de cylindre forment une première chambre hydraulique ; et le cylindre de servofrein principal est pourvu d'une première ouverture d'écoulement de liquide, et la première ouverture d'écoulement de liquide communique avec la première chambre hydraulique ; et
la première chambre hydraulique est raccordée à la chambre hydraulique (17-5) du cylindre de roue par le biais de la première conduite d'huile ; une extrémité de la première conduite d'huile est raccordée à l'ouverture d'écoulement de liquide (17-6) du cylindre de roue, et l'autre extrémité de la première conduite d'huile est raccordée à la première ouverture d'écoulement de liquide.

5. Procédé de commande de freinage, appliqué au système de freinage selon la revendication 4, dans lequel
l'ensemble de servofreinage comprend en outre un moteur de servofrein et une unité de commande de pression (6) ; le premier piston se meut dans le cylindre de servofrein principal, entraîné par le moteur de servofrein, pour changer un volume de la première chambre hydraulique ; et
le procédé de commande de freinage comprend :
le calcul d'une force de freinage cible nécessaire ;
l'envoi d'une première instruction à l'unité de commande de pression (6), dans lequel la première instruction donne l'instruction à l'unité de commande de pression (6) de commander le moteur de servofrein pour entraîner le premier piston pour réduire le volume de la première chambre hydraulique, de telle sorte qu'un liquide de freinage dans la première chambre hydraulique s'écoule dans la chambre hydraulique (17-5) à travers la première conduite d'huile, après être passé à travers la première ouverture d'écoulement de liquide, pour entraîner le piston (17-2) pour le mouvoir, afin d'agir sur le mécanisme actionneur de freinage pour fournir une première force de freinage ; et
l'envoi d'une deuxième instruction au mécanisme d'entraînement (17-15), dans lequel la deuxième instruction donne l'instruction au mécanisme d'entraînement (17-15) d'entraîner le piston (17-2) pour le mouvoir, en utilisant l'arbre de sortie (17-15a), le composant de transmission (17-8), et le bloc poussoir (17-9), pour fournir une deuxième force de freinage sur le mécanisme actionneur de freinage, dans lequel
la première force de freinage et la deuxième force de freinage sont couplées pour respecter la force de freinage cible.

6. Procédé selon la revendication 5, dans lequel le procédé de commande de freinage comprend en outre :
la détection d'une nécessité de freinage de stationnement ;
l'envoi d'une troisième instruction au mécanisme d'entraînement (17-15), dans lequel la troisième instruction donne l'instruction au mécanisme d'entraînement (17-15) d'entraîner le piston (17-2) pour le mouvoir, en utilisant l'arbre de sortie (17-15a), le composant de transmission (17-8), et le bloc poussoir (17-9), pour fournir une troisième force de freinage qui respecte la nécessité de freinage de stationnement en agissant sur le mécanisme actionneur de freinage ; et
l'envoi d'une quatrième instruction au composant de verrouillage (17-10), dans lequel la quatrième instruction donne l'instruction au composant de verrouillage (17-10) de commuter du second état de fonctionnement au premier état de fonctionnement.

7. Support lisible par ordinateur, comprenant des instructions programmables, dans lequel, lorsque les instructions programmables sont appelées, le procédé selon la revendication 5 peut être réalisé.
